(19) Europäisches Patentamt
European Patent Office
Office européen des brevets

(11) EP 3 369 787 B1

# (12) EUROPEAN PATENT SPECIFICATION

(45) Date of publication and mention of the grant of the patent:
**08.05.2019 Bulletin 2019/19**

(51) Int Cl.:
***C08F 265/06*** (2006.01) ***C09D 151/00*** (2006.01)
***C09J 151/00*** (2006.01) ***C09D 7/65*** (2018.01)

(21) Application number: **17159124.1**

(22) Date of filing: **03.03.2017**

(54) **CURABLE (METH)ACRYLIC RESIN COMPOSITIONS HAVING ENHANCED VISCOSITY**

HÄRTBARE (METH)ACRYLHARZZUSAMMENSETZUNGEN MIT ERHÖHTER VISKOSITÄT

COMPOSITIONS DE RÉSINE (MÉTH)ACRYLIQUE DURCISSABLE AYANT UNE VISCOSITÉ AMÉLIORÉE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**05.09.2018 Bulletin 2018/36**

(73) Proprietor: **Evonik Röhm GmbH**
**64293 Darmstadt (DE)**

(72) Inventors:
- **RICHTER, Ralf**
  **63457 Hanau (DE)**
- **DÖSSEL, Lukas Friedrich**
  **64295 Darmstadt (DE)**
- **HASSKERL, Thomas**
  **61476 Kronberg (DE)**
- **FRUTH, Andrea**
  **65197 Wiesbaden (DE)**
- **SCHNABEL, Michael**
  **64584 Biebesheim (DE)**
- **KLIEM, Patrick**
  **64853 Otzberg-Lengfeld (DE)**

(74) Representative: **Evonik Patent Association**
**c/o Evonik Industries AG**
**IP Management**
**PB 84/339**
**Rodenbacher Chaussee 4**
**63457 Hanau (DE)**

(56) References cited:
**EP-A1- 2 395 032**
**EP-A1- 2 796 482**
**WO-A1-2015/183782**
**US-A1- 2012 252 972**

EP 3 369 787 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### Field of the invention

The present invention relates to polymeric particles for use as impact modifiers in curable (meth)acrylic resin compositions and a process for the preparation thereof.

In its further aspect, the present invention relates to cured (meth)acrylic resin composition, in particular to adhesive or coating materials comprising polymeric particles of the present invention dispersed in a cured (meth)acrylic resin matrix. Said composition can be advantageously used as an adhesive, coating or a composite material.

### Prior art

Curable (meth)acrylic resin compositions are commonly used as adhesives, resin syrups, materials for dental fillings, coating materials and photocurable materials. These compositions commonly comprise polymeric particles. After curing of such (meth)acrylic resin compositions, the polymeric particles stay embedded into the cured (meth)acrylic resin matrix of the resulting cured (meth)acrylic resin composition, thereby acting as impact modifiers and improving mechanical properties of the cured material.

Commonly, curable (meth)acrylic resins comprise significant amounts of polymerisable monomeric components such as (meth)acrylates. Typically, these compounds have a low viscosity and, as a result, the viscosity of the corresponding curable (meth)acrylic resin compositions are low. This renders such compositions substantially unsuitable for applications which require the materials to have a high viscosity or to be in the gel-like form e.g. for applications such as pressure-sensitive adhesives, materials for dental applications, structural adhesives *etc.*

Although the viscosity of curable (meth)acrylic resin compositions can be increased by admixing liquid oligomeric or polymeric compounds thereto, the presence of such additives in the final cured (meth)acrylic resin composition e.g. in an adhesive material is often disadvantageous and deteriorates its mechanical properties and high temperature resistance.

Patent application EP 2 395 032 A1 describes curable acrylic resin compositions having a gel-like consistency and comprising polymeric particles having an acetone-soluble component of 30 wt.-% or more, wherein the mass average molecular weight of the acetone-soluble component is 100,000 or more. Unfortunately, monomeric components of acrylic resin compositions act as solvents, thereby dissolving a considerable amount of the material of such polymeric particles. In addition, the polymeric particles of EP 2 395 032 A1 undergo a strong irreversible swelling in the acrylic resin compositions.

As a consequence, the original core-shell structure of the polymeric particles becomes irreversibly damaged so that their ability to act as impact-modifiers in the resulting cured acrylic resin composition is diminished. In particular, the polymeric particles remain in a highly swollen state even after a substantially complete curing of the monomeric components of the acrylic resin compositions has taken place. This drawback of partially soluble polymeric particles becomes even more significant, when curable acrylic resin compositions comprising such polymeric particles are stored for some time so that the dissolution and irreversible swelling of the core-shell polymeric particles dispersed therein progresses to even a higher extent.

### Object of the invention

In view of the above drawbacks, it has been an object of the present invention to develop novel polymeric particles for use in curable (meth)acrylic resin compositions comprising monomeric components. These particles, when dispersed in a mixture comprising (meth)acrylic monomers, should render said mixture highly viscous or gel-like but, at the same time, retain their structure. In particular, it is highly desirable, that the polymeric particles only undergo a reversible swelling and return to their original form upon curing of the (meth)acrylic resin matrix. This would allow such polymeric particles to fulfil their function as impact modifiers in the resulting cured (meth)acrylic resin compositions, in particular in adhesives or coating materials.

Additionally, these polymeric particles should have the following features:

- a low tendency to form non-dispersible agglomerates upon isolation on a large scale; and
- a high dispersibility in a (meth)acrylic resin.

After curing, the resulting cured (meth)acrylic resin composition should display

- excellent mechanical properties, in particular, high impact resistance; and
- good high temperature properties, in particular a high glass transition temperature Tg and a high heat deflection

temperature (HDT).

Furthermore, it has been an object of the present invention to develop an industrial scale process for the manufacturing of the corresponding polymeric particles, curable (meth)acrylic compositions comprising such particles and the resulting cured (meth)acrylic resin compositions. The process should be advantageous from economic and environmental points of view.

**Summary of the invention**

Surprisingly, the inventors found that the above-defined problems can be successfully solved by the present invention. The present invention is based on the finding that dispersibility of polymeric particles in a (meth)acrylic composition and their ability to undergo a reversible swelling in a (meth)acrylic resin can be significantly improved, if the outer layer of polymeric particles is obtained by emulsion polymerisation in presence of a cross-linking monomer and a chain transfer agent. Furthermore and even more importantly, the polymeric particles substantially retain their structure and can revert to their original size after the (meth)acrylic monomers in the (meth)acrylic resin have been consumed during curing of the curable (meth)acrylic composition. Therefore, the resulting cured (meth)acrylic resin composition contains the polymeric particles in a substantially intact form and, therefore, has excellent mechanical properties.

Without wishing to be bound by a theory, applicants believe that during formation of polymeric particles, incorporation of a chain transfer agent into the cross-linked outer layer of polymeric particles has an advantageous effect on dispersibility of the resulting polymeric particles in the (meth)acrylic resin and, as a consequence, improves mechanical properties of the resulting cured (meth)acrylic resin composition. In particular, when the chain transfer agent has at least one thiol functionality, the chain transfer agent residues become incorporated into the growing polymeric chain as terminating units. It appears that advantageous properties of the resulting polymeric particles are a direct consequence of interactions between the (meth)acrylic resin constituents and these terminating units.

Additionally, the chain transfer agent adjusts the chain length of the cross-linked polymeric segments in the outer layer of polymeric particles. This further improves dispersibility of the polymeric particles in the (meth)acrylic resin and results in an additional improvement of mechanical properties of the resulting cured (meth)acrylic resin composition.

It is essential that during formation of the outer layer of polymeric particles at least one cross-linking agent and at least one chain transfer agent is present. This result is surprising because presence of a cross-linking agent is known to increase the molecular weight of resulting polymers, whereas chain transfer agents are typically used for the opposite purpose, namely to reduce the molecular weight of growing polymeric chains. A simultaneous use of a chain transfer agent in combination with a cross-linking agent is therefore uncommon.

Hence, in one aspect, the present invention relates to a polymeric particle having an average diameter from 300 nm to 1200 nm and comprising:

an outer layer comprising a cross-linked polymer A; and
at least a first inner layer comprising a cross-linked polymer B distinct from the cross-linked polymer A,

wherein the cross-linked polymer A is obtainable by emulsion polymerisation of a reaction mixture comprising at least one (meth)acrylic monomer, a cross-linking monomer A, a polymerisation initiator and a chain transfer agent.

In its further aspect, the present invention relates to a (meth)acrylic resin concentrate comprising polymeric particles as described above. Such (meth)acrylic resin concentrate can be conveniently stored for a long time and mixed with an additional (meth)acrylic resin by the customer to prepare a curable (meth)acrylic resin composition.

In yet a further aspect, the present invention relates to a curable (meth)acrylic resin composition comprising polymeric particles as described above.

Finally, a further aspect of the present invention is a cured (meth)acrylic resin composition comprising polymeric particles as described above. This cured (meth)acrylic resin composition is obtainable by curing of the curable (meth)acrylic resin composition of the present invention.

Still, further aspects of the present invention are related to processes for the preparation of the polymeric particles, of the (meth)acrylic resin concentrate, of the curable (meth)acrylic resin composition and of the cured (meth)acrylic resin composition.

In particular, in one further aspect, the present invention relates to a process for the preparation of polymeric particles having an average diameter from 300 nm to 1200 nm and comprising at least a first inner layer and an outer layer, the process comprising at least the following steps:

(a) forming the first inner layer comprising a cross-linked polymer B; and
(b) forming the outer layer of the polymeric particles comprising a cross-linked polymer A distinct from the cross-linked polymer B,

wherein the step (b) is carried out by emulsion polymerisation of a reaction mixture comprising at least one (meth)acrylic monomer, a cross-linking monomer A, a polymerisation initiator and a chain transfer agent. The step (b) of the process delivers polymeric particles in form of an aqueous dispersion.

In its further aspect, the present invention relates to a process for the preparation of polymeric particles having an average diameter from 300 nm to 1200 nm in form of a powder and comprising at least a first inner layer and an outer layer, the process comprising at least the following steps:

(a) forming the first inner layer comprising a cross-linked polymer B; and
(b) forming the outer layer of the polymeric particles comprising a cross-linked polymer A distinct from the cross-linked polymer B, by emulsion polymerisation of a reaction mixture comprising at least one (meth)acrylic monomer, a cross-linking monomer A, a polymerisation initiator and a chain transfer agent; and
(c) isolation of the polymeric particles in form of a powder from the aqueous dispersion obtained in step (b) by freeze coagulation, spray drying, lyophilisation or salting out.

Yet a further aspect of the present invention relates to a process for the preparation of a curable (meth)acrylic resin composition comprising polymeric particles dispersed in a (meth)acrylic resin, wherein the polymeric particles have an average diameter from 300 nm to 1200 nm and comprise at least a first inner layer and an outer layer, and the process comprises at least the following steps:

(a) forming the first inner layer comprising a cross-linked polymer B;
(b) forming the outer layer comprising a cross-linked polymer A distinct from the cross-linked polymer B, wherein the step (b) is carried out by emulsion polymerisation of a mixture comprising at least one (meth)acrylic monomer, a cross-linking monomer A, a polymerisation initiator and a chain transfer agent and the polymeric particles are obtained in form of an aqueous dispersion;
(c) freeze coagulation, spray drying, lyophilisation or salting out of the aqueous dispersion obtained in step (b), wherein the polymeric particles are isolated in form of a powder; and
(d) dispersing the powder obtained in step (c) in the (meth)acrylic resin.

Still, a further aspect of the present invention is related to a process for the preparation of a cured (meth)acrylic resin composition comprising polymeric particles, wherein the polymeric particles have an average diameter from 300 nm to 1200 nm and comprise at least a first inner layer and an outer layer and the process comprises at least the following steps:

(a) forming the first inner layer comprising a cross-linked polymer B;
(b) forming the outer layer comprising a cross-linked polymer A distinct from the cross-linked polymer B, wherein the step (b) is carried out by emulsion polymerisation of a mixture comprising at least one (meth)acrylic monomer, a cross-linking monomer A, a polymerisation initiator and a chain transfer agent and the polymeric particles are obtained in form of an aqueous dispersion;
(c) freeze coagulation, spray drying, lyophilisation or salting out of the aqueous dispersion obtained in step (b), wherein the polymeric particles are isolated in form of a powder;
(d) dispersing the powder obtained in step (c) in a (meth)acrylic resin; and
(e) curing the (meth)acrylic resin dispersion from the step (d), wherein the cured (meth)acrylic resin composition is obtained.

## Detailed description of the preferred embodiments

<u>Polymeric particles</u>

Polymeric particles of the present invention comprise at least a cross-linked outer layer and a cross-linked first inner layer. As used herein, the term "*outer layer*" refers to the outermost layer of polymeric particle, the surface of which constitutes the outer surface of the polymeric particle. The term *"first inner layer*" refers to a layer located beneath the outer layer.

According to the present invention, the outer layer comprises a polymer A and the first inner layer comprises a polymer B. The second inner layer, if present, and the third inner layer, if present, comprise polymers C and D, respectively.

As will be readily appreciated by a skilled person, polymeric particles of the present invention may be core-shell particles, core-shell-shell particles, core-shell-shell-shell particles etc. According to the present invention, use of core-shell particles is particularly preferred. Core-shell particles consist solely of an outer layer and a first inner layer

forming the core of the particle. Core-shell particles typically comprise a soft inner layer and a hard outer layer.

In case of a core-shell-shell particles, the term *"outer layer*" refers to the outermost shell of the particle, and the term *"first inner layer*" refers to a shell located between the core of the particle and the outermost shell. The second inner layer forms the core of the particle. Such particles typically have a hard second inner layer, a soft first inner layer and a hard outer layer.

Similarly, in case of core-shell-shell-shell particles the term *"outer layer*" refers to the outermost shell of the particle, and the term *"first inner layer*" refers to a shell located between the outermost shell of the particle and the second inner layer located just above the core. The third inner layer forms the core of the particle. This particles usually consists of a third inner layer, comprising the polymer D, followed by a second inner layer, comprising the polymer C, followed by a first inner layer, comprising the polymer B, and an outer layer, comprising the polymer A.

Regardless the structure of the polymeric particle, it is essential that its average diameter ranges from 300 nm to 1200 nm. Average particle diameter can be determined by a method known to a skilled person, e.g. by photon correlation spectroscopy according to the norm DIN ISO 13321. Within this size range, the dispersibility of polymeric particle in a (meth)acrylic resin typically increases with the increasing average diameter. Therefore, polymeric particles having an average diameter below 300 nm often show an insufficiently dispersibility in a (meth)acrylic resin. On the other hand, mechanical properties of the cured (meth)acrylic resin composition with polymeric particles having an average diameter above 1200 nm are only moderate. Additionally, the inventors found that an even better balance between dispersibility in a (meth)acrylic resin and impact-modifying properties can be achieved, when the polymeric particle has an average diameter from 320 nm to 900 nm, preferably from 350 nm to 600 nm.

Dispersibility of the polymeric particles in a (meth)acrylic resin can be evaluated visually or by using a microscope e.g. an optical microscope or a transmission electron microscope. The polymeric particles may be coloured by an oxidizing reagent such as osmium oxide or ruthenium oxide to improve their visibility. For instance, evaluation of dispersibility can be carried out as described in EP 2 662 414 A1.

According to the present invention, the cross-linked polymer A forming the outer layer is obtainable by emulsion polymerisation of a reaction mixture comprising at least one (meth)acrylic monomer, a cross-linking monomer A, a polymerisation initiator and a chain transfer agent.

The terms *"(meth)acrylic"* and "*(meth)acrylic monomer*" as used herein refers not only to methacrylates, e.g. methyl methacrylate, ethyl methacrylate, etc., but also acrylates, e.g. methyl acrylate, ethyl acrylate, etc. and also to mixtures composed of these two monomers. Typically, the reaction mixture for the preparation of the polymer A comprises at least one methacrylic monomer in combination with at least one acrylic monomer.

Preferred methacrylic monomers encompass methyl methacrylate, ethyl methacrylate, propyl methacrylate, isopropyl methacrylate, n-butyl methacrylate, sec-butyl methacrylate, *tert*-butyl methacrylate, pentyl methacrylate, hexyl methacrylate, heptyl methacrylate, octyl methacrylate, 2-octyl methacrylate, ethylhexyl methacrylate, nonyl methacrylate, 2-methyloctyl methacrylate, 2-*tert*-butylheptyl methacrylate, 3-isopropylheptyl methacrylate, decyl methacrylate, undecyl methacrylate, 5-methylundecyl methacrylate, dodecyl methacrylate, 2-methyldodecyl methacrylate, tridecyl methacrylate, 5-methyltridecyl methacrylate, tetradecyl methacrylate, pentadecyl methacrylate, hexadecyl methacrylate, 2-methylhexadecyl methacrylate, heptadecyl methacrylate, 5-isopropylheptadecyl methacrylate, 5-ethyloctadecyl methacrylate, octadecyl methacrylate, nonadecyl methacrylate, eicosyl methacrylate, cycloalkyl methacrylates, for example cyclopentyl methacrylate, cyclohexyl methacrylate (VISIOMER® c-HMA), 3-vinyl-2-butylcyclohexyl methacrylate, cycloheptyl methacrylate, cyclooctyl methacrylate, bornyl methacrylate and isobornyl methacrylate (VISIOMER® Terra IBOMA) and aromatic methacrylates such as aralkyl methacrylates, e.g. benzyl methacrylate. Use of methyl methacrylate and benzyl methacrylate is particularly preferred.

Preferred acrylic monomers encompass methyl acrylate, ethyl acrylate, propyl acrylate, isopropyl acrylate, n-butyl acrylate, sec-butyl acrylate, *tert*-butyl acrylate, pentyl acrylate, hexyl acrylate, heptyl acrylate, octyl acrylate, 2-octyl acrylate, ethylhexyl acrylate, nonyl acrylate, 2-methyloctyl acrylate, 2-*tert*-butylheptyl acrylate, 3-isopropylheptyl acrylate, decyl acrylate, undecyl acrylate, 5-methylundecyl acrylate, dodecyl acrylate, 2-methyldodecyl acrylate, tridecyl acrylate, 5-methyltridecyl acrylate, tetradecyl acrylate, pentadecyl acrylate, hexadecyl acrylate, 2-ethylhexadecyl acrylate, heptadecyl acrylate, 5-isopropylheptadecyl acrylate, 5-ethyloctadecyl acrylate, octadecyl acrylate, nonadecyl acrylate, eicosyl acrylate, cycloalkyl acrylates, *e.g.* cyclopentyl acrylate, cyclohexyl acrylate, 3-vinyl-2-butylcyclohexyl acrylate, cycloheptyl acrylate, cyclooctyl acrylate, bornyl acrylate and isobornyl acrylate. Use of $C_{1-8}$-alkyl acrylates such as methyl acrylate, ethyl acrylate or n-butyl acrylate is particularly preferred.

The cross-linking monomers A used during formation of the cross-linked polymer A are not particularly limited, as long as they can be copolymerised with the (meth)acrylic monomers of the reaction mixture and are capable of cross-linking the polymer A. These include in particular

(a) difunctional (meth)acrylates, preferably compounds of the general formula:

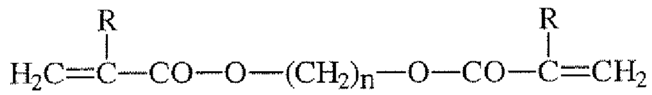

where R is hydrogen or methyl and n is a positive whole number greater than or equal to 2, preferably from 3 to 20, in particular di(meth)acrylates of propanediol, of butanediol, of hexanediol, of octanediol, of nonanediol, of decanediol, and of eicosanediol;
compounds of the general formula:

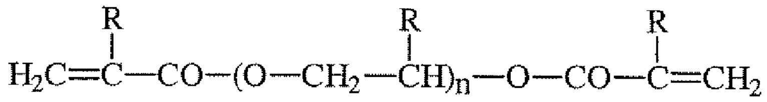

where R is hydrogen or methyl and n is a positive whole number from 1 to 14, in particular di(meth)acrylate of ethylene glycol, of diethylene glycol, of triethylene glycol, of tetraethylene glycol, of dodecaethylene glycol, of tetradecaethylene glycol, of propylene glycol, of dipropyl glycol and of tetradecapropylene glycol; glycerol di(meth)acrylate, 2,2'-bis[p-(γ-methacryloxy-β-hydroxypropoxy)phenylpropane] or bis-GMA, bisphenol A dimethacrylate, neopentyl glycol di(meth)acrylate, 2,2'-di(4-methacryloxypolyethoxyphenyl)propane having from 2 to 10 ethoxy groups per molecule and 1,2-bis(3-methacryloxy-2-hydroxypropoxy)butane; and

(b) tri- or polyfunctional (meth)acrylates, in particular trimethylolpropane tri(meth)acrylates and pentaerythritol tetra(meth)acrylate.

(c) graft crosslinking monomers having at least two C-C double bonds of differing reactivity, in particular allyl methacrylate and allyl acrylate;

(d) aromatic crosslinking monomers, in particular 1,2-divinylbenzene, 1,3-divinylbenzene and 1,4-divinylbenzene.

According to the present invention, the cross-linking monomer A is preferably a graft crosslinking monomer having at least two C-C double bonds of differing reactivity, *e.g.* allyl methacrylate and allyl acrylate, allyl methacrylate being particularly preferred.

As a polymerisation initiator, a standard initiator for emulsion polymerization can be employed. Suitable organic initiators include, for example, hydroperoxides such as *tert*-butyl hydroperoxide or cumene hydroperoxide. Suitable inorganic initiators are hydrogen peroxide and alkali metal and ammonium salts of peroxodisulphuric acid, especially sodium peroxodisulphate and potassium peroxodisulphate. Said initiators can be used individually or as a mixture. The precursors can be used either individually or in a mixture. They are preferably used in an amount of 0.05 wt.-% to 3.0 wt.-%, based on the total weight of the monomers. For instance, *tert*-butyl hydroperoxide can be advantageously used for this purpose.

Preference is given to redox systems, for example composed of 0.01 wt.-% to 0.05 wt.-% of organic hydroperoxides such as *tert*-butyl hydroperoxide and 0.05 wt.-% to 0.15 wt.-% of a reducing agent such as Rongalit®, based on the total weight of the monomers.

According to the present invention, it is essential that a least one chain transfer agent is present during formation of the outer layer of the particle. The choice of the chain transfer agent is not particularly limited, as long as said chain transfer agent is consumed during the emulsion polymerisation and becomes incorporated into the cross-linked polymer A. In a particularly preferred embodiment, the chain transfer agent has at least one thiol functionality. Examples of suitable chain transfer agents are thioglycolic acid, pentaerythritol tetrathioglycolate, 2-mercaptoethanol, 2-ethylhexylthioglycolat, or a $C_{1-20}$-alkyl thiol such as n-dodecylthiol or *tert*-dodecylthiol. Use of n-dodecylthiol showed to be particularly advantageous.

The chain transfer agent is generally used in amounts of 0.05 wt.-% to 5.0 wt.-%, based on the total weight of the cross-linked polymer A in the polymeric particlesweight of the monomer mixture, preferably in amounts of 0.1 wt.-% to 2.0 wt.-% and more preferably in amounts of 0.15 wt.-% to 1.0 wt.-%, yet even more preferably from 0.2 wt.-% to 0.5 wt.-%, still more preferably from 0.2 wt.-% to 0.4 wt.-% (cf., for example, H. Rauch-Puntigam, Th. Völker, "Acryl- und Methacrylverbindungen" [Acrylic and methacrylic compounds], Springer, Heidelberg, 1967; Houben-Weyl, Methoden der organischen Chemie [Methods of Organic Chemistry], Vol. XIV/1. p. 66, Georg Thieme, Heidelberg, 1961 or Kirk-Othmer, Encyclopedia of Chemical Technology, Vol. 1, pp. 29611, J. Wiley, New York, 1978). Since the monomers present in the reaction mixture during the formation of the outer layer become substantially quantitatively incorporated

in the cross-linked polymer A, the total weight of the cross-linked polymer A in the polymeric particles is equal to the total weight of the monomers present in the reaction mixture during the formation of the outer layer.
According to the present invention, the outer layer of the polymeric particle comprises a cross-linked polymer A and the first inner layer of the polymeric particle comprises a cross-linked polymer B. It is, however, preferred that the outer layer of the polymeric particle substantially consists of the cross-linked polymer A and the first inner layer of the polymeric particle substantially consists of the cross-linked polymer B.

Furthermore, the inventors found that dispersibility of core-shell polymeric particles in the (meth)acrylic resin is particularly high when the polymeric particle comprises
from 50.0 wt.-% to 90.0 wt.-%, preferably from 60.0 wt.-% to 80.0 wt.-%, more preferably from 65.0 wt.-% to 75.0 wt.-% of the cross-linked polymer B; and
from 50.0 wt.-% to 10.0 wt.-%, preferably from 40.0 wt.-% to 20.0 wt.-%, more preferably from 35.0 wt.-% to 25.0 wt.-% of the cross-linked polymer A, based on the weight of the polymeric particle.

Composition of the outer layer of the polymeric particle has a particularly strong effect on dispersibility in the (meth)acrylic resin and, as a result, on the mechanical properties of the corresponding cured (meth)acrylic resin composition.

In one preferred embodiment, a particularly good performance of the polymeric particles in terms of high dispersibility in a (meth)acrylic resin and advantageous behaviour during isolation has been observed when the cross-linked polymer A comprises repeating units derived from
from 55.0 wt.-% to 90.0 wt.-%, preferably from 70.0 wt.-% to 85.0 wt.-%, more preferably from 75.0 wt.-% to 83.0 wt.-% of at least one $C_{1-8}$-alkyl methacrylate;
from 34.0 wt.-% to 5.0 wt.-%, preferably from 29.0 wt.-% to 13.0 wt.-%, more preferably from 25.0 wt.-% to 16.0 wt.-% of at least one $C_{1-8}$-alkyl acrylate;
from 0.1 wt.-% to 5.0 wt.-%, preferably from 0.5 wt.-% to 3.0 wt.-%, more preferably from 1.0 wt.-% to 2.0 wt.-% of the cross-linking monomer A, based on the weight of the cross-linked polymer A; and, optionally,
from 0.0 wt.-% to 10.0 wt.-%, preferably 0.0 wt.-% to 5.0 wt.-% of at least one additional repeating unit distinct from $C_{1-8}$-alkyl (meth)acrylates.

The additional repeating units distinct from $C_{1-8}$-alkyl (meth)acrylates are not particularly limited and may be selected from repeating units derived from maleic anhydride, optionally substituted styrenes, dienes such as butadiene etc. For instance, the additional repeating units may be styrenic repeating units of the general formula (I)

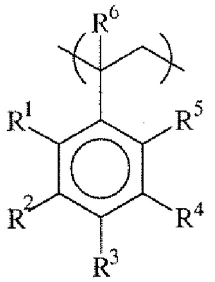

(I)

where each of the substituents $R^1$ to $R^5$, independently of the other, is hydrogen, a halogen, a $C_{1-6}$-alkyl group or a $C_{2-6}$ alkenyl group and the substituent $R^6$ is hydrogen or an alkyl group having from 1 to 6 carbon atoms.

In a particularly preferred embodiment, the cross-linked polymer A comprises repeating units derived
from 65.0 wt.-% to 90.0 wt.-%, preferably from 70.0 wt.-% to 85.0 wt.-%, more preferably from 75.0 wt.-% to 82.0 wt.-% of at least one $C_{1-8}$-alkyl methacrylate;
from 34.0 wt.-% to 5.0 wt.-%, preferably from 28.0 wt.-% to 13.0 wt.-%, more preferably from 25.0 wt.-% to 17.0 wt.-% of at least one $C_{1-8}$-alkyl acrylate; and
from 0.1 wt.-% to 5.0 wt.-%, preferably from 0.5 wt.-% to 3.0 wt.-%, more preferably from 1.0 wt.-% to 2.0 wt.-% of the cross-linking monomer A, based on the weight of the cross-linked polymer A.

For instance, in an even more preferred embodiment, an advantageous combination of an excellent processability and good dispersibility in the (meth)acrylic resins is achieved, when the cross-linked polymer A may comprise repeating units derived from
from 75.0 wt.-% to 80.0 wt.-% of methyl methacrylate;
from 23.0 wt.-% to 17.0 wt.-% of ethyl acrylate; and
from 1.0 wt.-% to 2.0 wt.-% of allyl methacrylate, based on the weight of the cross-linked polymer A.

In yet a further preferred embodiment, a good performance of polymeric particles has been observed for the following composition of the cross-linked polymer A:

from 45.0 wt.-% to 90.0 wt.-%, preferably from 60.0 wt.-% to 85.0 wt.-%, more preferably from 62.0 wt.-% to 80.0 wt.-% of at least one aralkyl methacrylate, e.g. benzyl methacrylate;
from 44.0 wt.-% to 9.0 wt.-%, preferably from 38.0 wt.-% to 23.0 wt.-%, more preferably from 38.0 wt.-% to 25.0 wt.-% of at least one $C_{1-8}$-alkyl acrylate;
from 0.1 wt.-% to 5.0 wt.-%, preferably from 0.5 wt.-% to 3.0 wt.-%, more preferably from 1.0 wt.-% to 2.0 wt.-% of the cross-linking monomer A, based on the weight of the cross-linked polymer A; and, optionally,
from 0.0 wt.-% to 10.0 wt.-%, preferably 0 wt.-% to 5.0 wt.-% of at least one additional repeating unit distinct from $C_{1-8}$-alkyl (meth)acrylates.

The additional repeating units distinct from $C_{1-8}$-alkyl (meth)acrylates are not particularly limited and may be selected from repeating units derived from maleic anhydride, optionally substituted styrenes, dienes such as butadiene etc. For instance, the additional repeating units may be styrenic repeating units of the general formula (I)

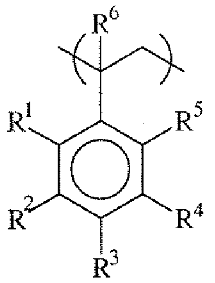

(I)

where each of the substituents $R^1$ to $R^5$, independently of the other, is hydrogen, a halogen, a $C_{1-6}$-alkyl group or a $C_{2-6}$ alkenyl group and the substituent $R^6$ is hydrogen or an alkyl group having from 1 to 6 carbon atoms.

In a particularly preferred embodiment, the cross-linked polymer A comprises repeating units derived
from 55.0 wt.-% to 90.0 wt.-%, preferably from 60.0 wt.-% to 85.0 wt.-%, more preferably from 65.0 wt.-% to 80.0 wt.-% of at least one aralkyl methacrylate, e.g. benzyl methacrylate;
from 44.0 wt.-% to 9.0 wt.-%, preferably from 39.0 wt.-% to 23.0 wt.-%, more preferably from 35.0 wt.-% to 16.0 wt.-% of at least one $C_{1-8}$-alkyl acrylate; and
from 0.1 wt.-% to 5.0 wt.-%, preferably from 0.5 wt.-% to 3.0 wt.-%, more preferably from 1.0 wt.-% to 2.0 wt.-% of the cross-linking monomer A, based on the weight of the cross-linked polymer A.

For instance, in a particularly preferred embodiment, the cross-linked polymer A may comprise repeating units derived from
from 65.0 wt.-% to 70.0 wt.-% of benzyl methacrylate;
from 33.0 wt.-% to 27.0 wt.-% of butyl acrylate; and
from 1.0 wt.-% to 2.0 wt.-% of allyl methacrylate, based on the weight of the cross-linked polymer A.

Preferably, the cross-linked polymer A is substantially free of monomeric units capable of reacting with the (meth)acrylic resin. In particular, the cross-linked polymer A advantageously comprises less than 5.0 wt.-%, more preferably less than 1.0 wt.-%, even more preferably less than 0.1 wt.-% of monomeric units having an epoxy functionality.

The composition of the cross-linked polymer B forming the first inner layer of the polymeric particles also has a strong impact on behaviour of the particles in the (meth)acrylic resin and on mechanical properties of the resulting cured (meth)acrylic resin composition. The inventors found that for the sake of an optimal performance the cross-linked polymer B preferably comprises repeating units derived from
at least 60.0 wt.-%, more preferably at least 70.0 wt.-%, even more preferably at least 80.0 wt.-% of at least one $C_{1-8}$-alkyl acrylate; and
0.1 wt.-% to 10.0 wt.-% of a cross-linking monomer B, based on the weight of the cross-linked polymer B.

The choice of the cross-linking monomer B is not particularly limited and the compounds mentioned in the context of the cross-linking monomer A can be used for this purpose. In some embodiments, the cross-linking monomer A may be identical with the cross-linking monomer B. For instance, allyl methacrylate can be advantageously employed as cross-linking monomer A and cross-linking monomer B.

To avoid preliminary agglomeration of polymeric particles during isolation and for the purpose of improving the dispersibility in the (meth)acrylic resin, the composition of the outer layer of the polymeric particle is advantageously selected in such a way that the cross-linked polymer A has a glass transition temperature Tg from 50 °C to 120 °C, preferably from 60 °C to 110 °C, more preferably from 60 °C to 80 °C. In yet a further preferred embodiment, the cross-linked polymer A has a glass transition temperature Tg from -10 °C to 50 °C, preferably from 5 °C to 30 °C.

Additionally, for the sake of achieving a particularly high impact resistance of the resulting cured (meth)acrylic resin composition, the composition of the first inner layer of the polymeric particle is advantageously chosen in such a

way, that the cross-linked polymer B has a glass transition temperature Tg from -80 °C to -20 °C, preferably from -65 °C to -30 °C.

As will be readily appreciated by skilled person, glass transition temperature Tg of a polymer can be determined in a known manner by means of differential scanning calorimetry (DSC). The DSC-measurements can e.g. be performed by an instrument DSC 822e obtainable from Mettler-Toledo AG according to the norm DIN EN ISO 11357. For this purpose, two cycles are performed within the interval between -80 °C and 150 °C. The heating/cooling rate is preferably10 °C/min. The glass transition temperature Tg can be typically calculated by using a half-height technique in the transition region.

Alternatively, for instance if a DSC measurement is not possible, the glass transition temperature Tg can also be calculated approximately in advance by means of the Fox equation. According to Fox T. G., Bull. Am. Physics Soc. 1, 3, page 123 (1956):

$$\frac{1}{Tg} = \frac{x_1}{Tg_1} + \frac{x_2}{Tg_2} + \ldots + \frac{x_n}{Tg_n}$$

where $x_n$ is the mass fraction (% by weight/100) of the monomer n and $Tg_n$ is the glass transition temperature in kelvin of the homopolymer of the monomer n. Further helpful pointers can be found by the person skilled in the art in Polymer Handbook 2nd Edition, J. Wiley & Sons, New York (1975), which gives Tg values for the most common homopolymers.

As a result of a relatively high degree of cross-linking of polymers in the outer layer and in the first inner layer, particles of the present invention have a relatively low acetone-soluble portion. Typically, the acetone-soluble portion of the particles is not higher than 10 wt.-%, more preferably not higher than 5 wt.-%, even more preferably, not higher than 2 wt.-%. The term "*acetone-soluble portion*" as used herein refers to the dissolved weight% obtained after a given amount of polymeric particles in form of a powder dissolved in acetone at 50 folds by mass under reflux conditions for 6 hours at 70 °C. The acetone-soluble portion of polymeric particles can be measured by a procedure described in *e.g.* EP 2 796 482 A1.

Process for the preparation of polymeric particles

Preparation of polymeric particles in form of an aqueous dispersion can be carried out by seeded emulsion polymerisation according to a procedure typically employed for the preparation of impact-modifying particles. Such procedures are described *inter alia* in WO 2016/046043.

The emulsion polymerisation can be initiated by a polymerisation initiator as described above. The polymerisation initiator can be initially charged or metered in. In addition, it is also possible to initially charge a portion of the polymerisation initiator and to meter in the remainder.

The reactive mixture can be stabilized by means of emulsifiers and/or protective colloids. Preference is given to stabilization by means of emulsifiers, in order to obtain a low dispersion viscosity, wherein use of anionic and/or nonionic emulsifiers is even more preferable. Typically, 90.00 to 99.99 parts by weight of water and 0.01 to 10.00 parts by weight of emulsifier are initially charged, where the stated proportions by weight add up to 100.00 parts by weight.

The total amount of emulsifier is preferably from 0.1 wt.-% to 5 wt.-%, especially from 0.5 wt.-% to 3 wt.-%, based on the total weight of the monomers. Particularly suitable emulsifiers anionic and/or nonionic emulsifiers or mixtures thereof are especially:

- alkyl sulphates, preferably those having 8 to 18 carbon atoms in the alkyl substituent, alkyl and alkylaryl ether sulphates having 8 to 18 carbon atoms in the alkyl substituent and 1 to 50 ethylene oxide units;
- sulphonates, preferably alkylsulphonates having 8 to 18 carbon atoms in the alkyl substituent, alkylarylsulphonates having 8 to 18, preferably 14 to 17 carbon atoms in the alkyl substituent, esters and monoesters of sulphosuccinic acid with monohydric alcohols or alkylphenols having 4 to 15 carbon atoms in the alkyl substituent; these alcohols or alkylphenols may optionally be ethoxylated with 1 to 40 ethylene oxide units;
- phosphoric partial esters and the alkali metal and ammonium salts thereof, preferably alkyl and alkylaryl phosphates having 8 to 20 carbon atoms in the alkyl or alkylaryl substituent and 1 to 5 ethylene oxide units;
- alkyl polyglycol ethers, preferably having 8 to 20 carbon atoms in the alkyl substituent and 8 to 40 ethylene oxide units;
- alkylaryl polyglycol ethers, preferably having 8 to 20 carbon atoms in the alkyl or alkylaryl substituent and 8 to 40 ethylene oxide units;
- ethylene oxide/propylene oxide copolymers, preferably block copolymers, favourably having 8 to 40 ethylene oxide and/or propylene oxide units.

In one embodiment of the invention, the emulsion polymerization is conducted in the presence of anionic

emulsifiers selected from the group consisting of paraffinsulphonates, alkyl sulphosuccinates and alkoxylated and sulphonated paraffins.

Preferably, the polymerization is started by heating the reaction mixture to the polymerization temperature and metering in the initiator, preferably in aqueous solution. The metered additions of emulsifier and monomers can be conducted separately or as a mixture. In the case of metered addition of mixtures of emulsifier and monomer, the procedure is to premix the emulsifier and the monomer in a mixer connected upstream of the polymerization reactor. Preferably, the remainder of emulsifier and the remainder of monomer which have not been initially charged are metered in separately after the polymerization has started.

In addition, it is particularly advantageous for the purposes of the present invention for the initial charge to contain what is called a "*seed latex*", preferably obtainable by polymerizing alkyl (meth)acrylates. Preference is given to initially charging an aqueous emulsion containing a seed latex. In a preferred embodiment, a seed latex having an average particle diameter in the range from 8.0 nm to 40.0 nm is initially charged.

The amount of seed latex is preferably adjusted following formula:

$$\text{amount seed latex [g]} = 1/(\text{radius target particle size [nm]}/\ \text{radius seed latex [nm]})^3 \times \text{amount monomers [g]}$$

The particle size may be measured using particle size based on the principle of photon correlation spectroscopy in water at room temperature (23 °C). For instance, an instrument obtainable from Beckman Coulter under the trade name N5 Submicron Particle Size Analyzer can be used for this purpose.

Added to the seed latex are the monomer constituents of the actual core, preferably under such conditions that the formation of new particles is avoided. In this way, the polymer formed in the first process stage is deposited in the form of a shell around the seed latex. Analogously, the monomer constituents of the first shell material are added to the emulsion polymer under such conditions that the formation of new particles is avoided. In this way, the polymer formed in the second stage is deposited in the form of a shell around the existing core. This procedure should be repeated correspondingly for every further shell.

In a further preferred embodiment of the present invention, the polymeric particles according to the invention are obtained by an emulsion polymerization process in which, rather than the seed latex, $C_{14/17}$-*sec*-alkyl sulfonates, is initially charged in emulsified form. The core-shell or core-shell-shell structure is obtained analogously to the above-described procedure by stepwise addition and polymerization of the corresponding monomers with avoidance of the formation of new particles. Further details of the polymerization process can be found in the art in patent specifications such as DE 3343766, DE 3210891, DE 2850105, DE 2742178 and DE 3701579.

Typically, the preparation of polymeric particles is carried out in such a way that the resulting aqueous dispersion has a solid content from 10 wt.-% to 60 wt.-%, preferably from 20 wt.-% to 50 wt.-%, based on the total weight of the aqueous dispersion. The solid content of the aqueous dispersion can be determined by a commercially available moisture analyser such as e.g. Sartorius MA45.

Methods for isolation of polymeric particles in form of a powder

The methods for isolation of polymeric particles from the aqueous dispersion are not particularly limited and any commonly used methods such as freeze coagulation, spray drying, lyophilisation or salting out may be used. However, the continuous and semi-continuous freeze coagulation methods described in WO 2015/074883 are particularly suitable for this purpose. The term *"continuous freeze coagulation"* as used herein refers to a process with a continuous mass flow. A *"semi-continuous freeze coagulation"* process is a process where the steps of filling, freezing and discharging take place in succession.

The freeze coagulation method preferably comprises at least the following steps:

- freezing step;
- addition of water and/or steam;
- thawing step; and
- sintering step.

Since polymeric particles of the present invention have an excellent dispersibility i.e. an inherently low propensity to agglomerate, use of the freeze coagulation method of WO 2015/074883 results in a non-sticky non-agglomerated powder which can be easily dispersed in a fluid medium such as a (meth)acrylic resin. Remarkably, no particle agglomeration takes place even if the material is exposed to temperatures up to 50 °C, preferably up to 60 °C, even more preferably up to 70 °C and particularly preferably up to 80 °C. This typically takes place upon addition of steam to the

coagulated material or during the sintering step.

Preparation of a (meth)acrylic resin concentrate

The (meth)acrylic resin concentrate comprising polymeric particles dispersed in the (meth)acrylic resin can be prepared by a procedure known in the prior art. Typically, such procedure comprises, consists of, or consists essentially of dispersing polymeric particles in form of a powder into a (meth)acrylic resin with a high shear mixer in a dispersion zone under dispersion conditions wherein said dispersion zone does not contain a solvent and wherein said dispersion conditions comprise a dispersion temperature of 40 °C to 100 °C, a Reynolds Number greater than 10, and a dispersion time of from 30 minutes to 300 minutes. The equipment used for this purpose is well-known to a skilled person and substantially any dispersing instrument *e.g.* ULTRA-TURRAX® or DISPERMAT® CV3, built-in into vacuum dispersing system CDS 1000 can be employed.

The dispersion zone is maintained at the dispersion conditions for as long as necessary to achieve a uniform, single/discrete particle dispersion. In an embodiment, the dispersion zone is maintained at the dispersion conditions for a time in the range of 30 minutes to 180 minutes. Advantageously, a vacuum can be applied to remove any entrapped air.

Typically, the (meth)acrylic resin concentrate formed by this process contains from 5 wt.-% to 45 wt.-% of polymeric particles, preferably from 10 wt.-% to 40 wt.-%, even more preferably from 20 wt.-% to 40 wt.-%, based on the weight of the (meth)acrylic resin concentrate.

(Meth)acrylic resins for use in the present invention

The choice of (meth)acrylic resins for use in the present invention is not particularly limited and compositions comprising curable (meth)acrylic monomers, polymerisable (meth)acrylic monomers, curable (meth)acrylic oligomers and polymerisable (meth)acrylic oligomers can be used for this purpose. The (meth)acrylic resin is typically liquid at room temperature.

In a preferred embodiment, (meth)acrylic resin comprises from 50 wt.-% to 100 wt.-% of at least one monomeric (meth)acrylate, based on the weight of the (meth)acrylic resin. Monomeric methacrylates of the (meth)acrylic resin can be selected from acrylic monomers or methacrylic monomers listed above.

The (meth)acrylic resin may further comprise at least one epoxy resin. For instance, the (meth)acrylic resin may be a mixture containing from 5 to 95 wt.-% of at least one monomeric (meth)acrylate and from 95 to 5 wt.% epoxy resin, more preferably from 10 to 90 wt.-% of at least one monomeric (meth)acrylate and from 90 to 10 wt.% epoxy resin, even more preferably from 20 to 80 wt.-% of at least one monomeric (meth)acrylate and from 80 to 20 wt.% epoxy resin, based on the total weight of the (meth)acrylic resin.

The epoxy resins used in the present invention can vary and include conventional and commercially available epoxy resins, which can be used alone or in combinations of two or more, including, for example, novolac resins and isocyanate modified epoxy resins. In choosing epoxy resins, consideration should not only be given to properties of the final product, but also to viscosity and other properties that may influence the processing of the composition comprising polymeric particles.

The epoxy resin component can be any type of epoxy resin useful in moulding compositions, including any material containing one or more reactive epoxy groups. Epoxy resins useful in embodiments disclosed herein can include mono-functional epoxy resins, multi- or poly-functional epoxy resins, and combinations thereof. Monomeric and polymeric epoxy resins can be aliphatic, cycloaliphatic, aromatic, or heterocyclic epoxy resins. The polymeric epoxy resins include linear polymers having terminal epoxy groups (*e.g.* a diglycidyl ether of a polyoxyalkylene glycol), polymer skeletal epoxy units (*e.g.* polybutadiene polyepoxide) and polymers having pendant epoxy groups. The epoxides may be pure compounds, but are generally mixtures or compounds containing one, two or more epoxy groups per molecule. In an embodiment, the epoxy resin is prepared from a halogen-containing compound. Typically, the halogen is bromine. In some embodiments, epoxy resins can also include reactive -OH groups, which can react at higher temperatures with anhydrides, organic acids, amino resins, phenolic resins, or with epoxy groups (when catalysed) to result in additional crosslinking. In an embodiment, the epoxy resin is produced by contacting a glycidyl ether with a bisphenol compound, such as, for example, bisphenol A or tetrabromobisphenol A to form epoxy-terminated oligomers. In another embodiment, the epoxy resins can be advanced by reaction with isocyanates to form oxazolidinones. Suitable oxazolidinones include toluene diisocyanate and methylene diisocyanate (MDI or methylene bis(phenylene isocyanate)).

The thermosetting resin concentrate of the present invention can also be modified by addition of other thermosets and thermoplastics. Examples of other thermosets include but are not limited to cyanates, triazines, maleimides, benzoxazines, allylated phenols, and acetylenic compounds. Examples of thermoplastics include poly(aryl ethers) such as polyphenylene oxide, poly(ether sulfones), poly (ether imides) and related materials.

In general, the epoxy resins for use in the present invention can be selected from glycidylated resins, cycloaliphatic resins, epoxidized oils, and so forth. The glycidated resins are frequently the reaction product of a glycidyl

ether, such as epichlorohydrin, and a bisphenol compound such as bisphenol A, $C_{4-28}$-alkyl glycidyl ethers, $C_{4-28}$-alkyl- and alkenyl-glycidyl esters, $C_{4-28}$-alkyl-mono- and poly-phenol glycidyl ethers, polyglycidyl ethers of polyvalent phenols, such as pyrocatechol, resorcinol, hydroquinone, 4,4'-dihydroxydiphenyl methane (or bisphenol F), 4,4'-dihydroxy-3,3'-dimethyldiphenyl methane, 4,4'-dihydroxydiphenyl dimethyl methane (or bisphenol A), 4,4'-dihydroxydiphenyl methyl methane, 4,4'-dihydroxydiphenyl cyclohexane, 4,4'-dihydroxy-3,3'-dimethyldiphenyl propane, 4,4'-dihydroxydiphenyl sulfone, and tris(4-hydroxyphynyl)methane, polyglycidyl ethers of the chlorination and bromination products of the above-mentioned diphenols, polyglycidyl ethers of novolacs, polyglycidyl ethers of diphenols obtained by esterifying ethers of diphenols obtained by esterifying salts of an aromatic hydrocarboxylic acid with a dihaloalkane or dihalogen dialkyl ether, polyglycidyl ethers of polyphenols obtained by condensing phenols and long-chain halogen paraffins containing at least two halogen atoms. Other examples of epoxy resins useful in embodiments disclosed herein include bis-4,4'-(1-methylethylidene) phenol diglycidyl ether and (chloromethyl)epoxy bisphenol A diglycidyl ether.

In some embodiments, the epoxy resin can include glycidyl ether type, glycidyl ester type, alicyclic type, heterocyclic type, and halogenated epoxy resins, etc. Non-limiting examples of suitable epoxy resins can further include cresol novolac epoxy resin, phenolic novolac epoxy resin, biphenyl epoxy resin, hydroquinone epoxy resin, stilbene epoxy resin, and mixtures and combinations thereof.

Suitable polyepoxy compounds can include resorcinol diglycidyl ether (1,3-bis-(2,3-epoxypropoxy) benzene), diglycidyl ether of bisphenol A (2,2-bis(p-(2,3-epoxypropoxy)phenyl)propane), triglycidyl-p-aminophenol (4-(2,3-epoxypropoxy)-*N*,*N*-bis(2,3-epoxypropyl)aniline), diglycidyl ether of bromobispehnol A (2,2-bis(4-(2,3-epoxypropoxy)3-bromophenyl)propane), diglydicylether of bisphenol F (2,2-bis(p-(2,3-epoxypropoxy)phenyl)methane), triglycidyl ether of meta- and/or para-aminophenol (3-(2,3-epoxypropoxy)-*N*,*N*-bis(2,3-epoxypropyl)aniline), and tetraglycidyl methylene dianiline (*N*,*N*,*N'*,*N'*-tetra(2,3-epoxypropyl)-4,4'-diaminodiphenyl methane), and mixtures of two or more polyepoxy compounds. A more exhaustive list of useful epoxy resins found can be found in Lee, H. and Neville, K., Handbook of Epoxy Resins, McGraw-Hill Book Company, 1982 reissue.

Other suitable epoxy resins include polyepoxy compounds based on aromatic amines and epichlorohydrin, such as *N*,*N'*-diglycidyl-aniline, *N*,*N'*-dimethyl-*N*,*N'*-diglycidyl-4,4'-diaminodiphenyl methane, *N*,*N*,*N'*,*N'*-tetraglycidyl-4,4'-diaminodiphenyl methane, *N*-diglycidyl-4-aminophenyl glycidyl ether, and *N*,*N*,*N'*,*N'*-tetraglycidyl-1,3-propylene-bis-4-aminobenzoate. Epoxy resins can also include glycidyl derivatives of one or more of aromatic diamines, aromatic monoprimary amines, aminophenols, polyhydric phenols, polyhydric alcohols, or polycarboxylic acids.

Useful epoxy resins include, for example, polyglycidyl ethers of polyhydric polyols, such as ethylene glycol, methylene glycol, 1,2-propylene glycol, 1,5-pentanediol, 1,2,6-hexanetriol, glycerol, and 2,2-bis(4-hydroxycyclohexyl)propane, polyglycidyl ethers of aliphatic and aromatic polycarboxylic acids, such as oxalic acid, succinic acid, glutaric acid, terephthalic acid, 2,6-napthalene dicarboxylic acid, and dimerized linoleic acid, polyglycidyl ethers of polyphenols, such as bisphenol A, bisphenol F, 1,1-bis(4-hydroxyphenyl)ethane, 1,1-bis(4-hydroxyphenyl)isobutane, and 1,5-dihydroxy napthalene, modified epoxy resins with acrylate or urethane moieties, glycidlyamine epoxy resins and novolac resins.

The epoxy compounds can be cycloaliphatic or alicyclic epoxides. Examples of cycloaliphatic epoxides include diepoxides of cycloaliphatic esters of dicarboxylic acids such as bis(3,4-epoxycyclohexylmethyl)oxalate, bis(3,4-epoxycyclohexylmethyl)adipate, bis(3,4-epoxy-6-methylcyclohexylmethyl)adipate, bis(3,4-epoxycyclohexylmethyl)pimelate, vinylcyclohexene diepoxide, limonene diepoxide, dicyclopentadiene diepoxide, and the like. Other suitable diepoxides of cycloaliphatic esters of dicarboxylic acids are described, for example, in U.S. Patent No. 2,750,395.

Other cycloaliphatic epoxides include 3,4-epoxycyclohexylmethyl-3,4-epoxycyclohexane carboxylates such as 3,4-epoxycyclohexylmethyl-3,4-epoxycyclohexane carboxylate, 3,4-epoxy-1-methylcyclohexyl-methyl-3,4-epoxy-1-methylcyclohexane carboxylate, 6-methyl-3,4-epoxycyclohexylmethylmethyl-6-methyl-3,4-epoxycyclohexane carboxylate, 3,4-epoxy-2-methylcyclohexylmethyl-3,4-epoxy-2-methylcyclohexane carboxylate, 3,4-epoxy-3-methylcyclohexylmethyl-3,4-epoxy-3-methylcyclohexane carboxylate, 3,4-epoxy-5-methylcyclohexyl-methyl-3,4-epoxy-5-methylcyclohexane carboxylate and the like. Other suitable 3,4-epoxycyclohexylmethyl-3,4-epoxycyclohexane carboxylates are described, for example, in U.S. Patent No. 2,890,194.

Further epoxy-containing materials which are useful include those based on glycidyl ether monomers. Examples are di- or polyglycidyl ethers of polyhydric phenols obtained by reacting a polyhydric phenol, such as a bisphenol compound with an excess of chlorohydrin such as epichlorohydrin. Such polyhydric phenols include resorcinol, bis(4-hydroxyphenyl)methane (known as bisphenol F), 2,2-bis(4-hydroxyphenyl)propane (known as bisphenol A), 2,2-bis(4'-hydroxy-3',5'-dibromophenyl)propane, 1,1,2,2-tetrakis(4'-hydroxy-phenyl)ethane or condensates of phenols with formaldehyde that are obtained under acidic conditions such as phenol novolacs and cresol novolacs. Examples of this type of epoxy resin are described in U.S. Patent No. 3,018,262. Other examples include di- or polyglycidyl ethers of polyhydric alcohols such as 1,4-butanediol, or polyalkylene glycols such as polypropylene glycol and di- or polyglycidyl ethers of cycloaliphatic polyols such as 2,2-bis(4-hydroxycyclohexyl)propane. Other examples are monofunctional resins such as cresyl glycidyl ether or butyl glycidyl ether. Another class of epoxy compounds are polyglycidyl esters and poly(beta-methylglycidyl) esters of polyvalent carboxylic acids such as phthalic acid, terephthalic acid, tetrahydrophthalic acid or

hexahydrophthalic acid. A further class of epoxy compounds are *N*-glycidyl derivatives of amines, amides and heterocyclic nitrogen bases such as *N*,*N*-diglycidyl aniline, *N*,*N*-diglycidyl toluidine, *N*,*N*,*N*',*N*'-tetraglycidyl bis(4-aminophenyl)methane, triglycidyl isocyanurate, *N*,*N*'-diglycidyl ethyl urea, *N*,*N*'-diglycidyl-5,5-dimethylhydantoin, and *N*,*N*'-diglycidyl-5-isopropylhydantoin.

In a further embodiment, the epoxy resin can be produced by contacting a glycidyl ether with a bisphenol compound and a polyisocyanate, such as toluene diisocyanate or *"methylene diisocyanate"* (diisocyanate of methylene dianiline), to form oxazolidinone moieties.

Epoxy compounds that are readily available further include octadecylene oxide, diglycidyl ether of bisphenol A; D.E.R.™ 331 (bisphenol A liquid epoxy resin) and D.E.R.™ 332 (diglycidyl ether of bisphenol A) available from The Dow Chemical Company, USA, vinylcyclohexene dioxide, 3,4-epoxycyclohexylmethyl-3,4-epoxycyclohexane carboxylate, 3,4-epoxy-6-methylcyclohexyl-methyl-3,4-epoxy-6-methylcyclohexane carboxylate, bis(3,4-epoxy-6-methylcyclohexylmethyl) adipate, bis(2,3-epoxycyclopentyl) ether, aliphatic epoxy modified with polypropylene glycol, dipentene dioxide, epoxidized polybutadiene, silicone resin containing epoxy functionality, flame retardant epoxy resins (such as a brominated bisphenol type epoxy resin available under the trade names D.E.R.™ 530, 538, 539, 560, 592, and 593, available from The Dow Chemical Company, USA), polyglycidyl ether of phenolformaldehyde novolac (such as those available under the tradenames D.E.N.™ 431, D.E.N.™ 438, and D.E.N.™ 439 available from The Dow Chemical Company, USA), and resorcinol diglycidyl ether. Other examples include D.E.R.™ 383, D.E.R.™ 6508, D.E.R.™ 661, D.E.R.™ 671, D.E.R.™ 664, D.E.R.™ 6510, EPON™ 820, EPON™ 821, EPON™ 826, EPON™ 828, and the like, and mixtures thereof. A further example of a suitable epoxy resin is a resin produced from bisphenol A and epichlorohydrin, for instance a resin of Epikote™ 828 series such as Epikote™ 828 LVEL. Epikote™ 828 LVEL is commercially available from Hexion Inc., Columbus OH, USA.

Curable (meth)acrylic resin composition comprising polymeric particles

Typically, the curable (meth)acrylic composition comprising polymeric particles is prepared from a resin concentrate as described above by diluting it with an additional amount of a (meth)acrylic resin and, optionally, adding further components of the curable (meth)acrylic composition.

Alternatively, the curable (meth)acrylic resin composition comprising polymeric particles can be obtained directly by dispersing the polymeric particles in a (meth)acrylic resin as described above for the (meth)acrylic resin concentrate.

Typically, the curable (meth)acrylic composition is prepared in such a way, that it comprises from 2 wt.-% to 30 wt.-%, more preferably from 5 wt.-% to 20 wt.-%, even more preferably from 5 wt.-% to 15 wt.-% of polymeric particles, based on the total weight of the curable (meth)acrylic composition. This amount of polymeric particles is sufficient to provide a significant improvement of mechanical properties of the resulting cured (meth)acrylic resin compositions, compared to the unmodified material.

Typically, the curable (meth)acrylic composition of the present invention, has a gel-like state at 23 °C and can be advantageously employed in a variety of applications such as pressure-sensitive adhesives, materials for dental applications, structural adhesives *etc.*

However, in some embodiments, the curable (meth)acrylic composition of the present invention is a highly viscous liquid at room temperature. For instance, the viscosity of the curable (meth)acrylic resin composition may be higher than 1 000 mPa*s, more preferably higher than 2 000 mPa*s, even more preferably higher than 3 000 mPa*s, still more preferably higher than 5 000 mPa*s, measured at 23 $\pm$ 1 °C according to the norm ISO 2884.

The viscosity measurement is carried out 24 hours after preparation of the curable (meth)acrylic resin composition. For the measurement, an instrument such as viscosity of these compositions was measured using a Haake Mars I Rheometer (Thermo Scientific). Measurements are made in oscillation (1.0%, 1 Hz) using a plate-to-plate geometry (plate diameter 35 mm). The measurement takes place in a dynamic mode in the range from 20 °C to 120 °C with a heating rate of 1 K/min.

In particular, it is desired that the swelling of polymeric particles of the present invention in the curable (meth)acrylic composition is remarkably high. The average diameter increase of the polymeric particles is typically higher than 50%, preferably higher than 100%, even more preferably higher than 150%, yet even more preferably higher than 200%, particularly preferably higher than 250% after a 24 hour storage at 24°C in neat isobornyl acrylate.

Importantly, in contrast to polymeric particles of the prior art, the swelling of the polymeric particles of the present invention typically takes place in a reversible manner. In other words, curing of the (meth)acrylic resin composition is usually accompanied by at least a partial shrinkage of the polymeric particles. Therefore, the average diameter of the polymeric particles in the cured (meth)acrylic composition is typically not higher than 200%, preferably not higher than 170%, even more preferably not higher than 150%, yet even more preferably not higher than 120% of the average diameter of the polymeric particles, measured just after the isolation in form of a powder.

Cured (meth)acrylic resin composition comprising polymeric particles

The cured (meth)acrylic resin composition comprising polymeric particles can be obtained from the curable (meth)acrylic composition comprising polymeric particles by a polymerisation or curing procedure known in the prior art. As can be readily appreciated by a skilled person, the exact composition of the cured (meth)acrylic resin composition depends on its purpose.

The mechanical properties of the cured (meth)acrylic resin compositions of the present invention are significantly better than properties of the corresponding unmodified materials. In particular, the cured (meth)acrylic resin compositions of the present invention have a particularly high notch impact strength which may be measured e.g. according to the Izod impact strength test (Izod notch impact strength). Typically, the notch impact strength of the cured (meth)acrylic resin compositions is at least 20% higher, preferably at least 40% higher, more preferably at least 60% higher, even more preferably at least 80% higher and particularly preferably at least 100% higher than the notch impact strength of the corresponding cured (meth)acrylic resin compositions without the polymeric particles of the present invention. The Izod impact strength can be performed according to the norm DIN EN ISO 180 at 23 °C.

The specimen for the Izod impact strength measurement can be notched using e.g. a CNC mill.

The cured (meth)acrylic resin composition of the present invention can be advantageously used for advanced composites, electronics, coatings pressure-sensitive adhesives, materials for dental applications and structural adhesives. Examples of advanced composites include but are not limited to aerospace composites, automotive composites, composites for wind energy applications, and composites useful in the sports and recreation industries. Typical electronic applications include but are not limited to electronic adhesives, electrical laminates, and electrical encapsulations.

In summary, the subject-matter of the present invention can be summarized as follows:

(1) Polymeric particle having an average diameter from 300 nm to 1200 nm and comprising:

an outer layer comprising a cross-linked polymer A
and a first inner layer comprising a cross-linked polymer B distinct from the cross-linked polymer A,
wherein the cross-linked polymer A is obtainable by emulsion polymerisation of a reaction mixture comprising at least one (meth)acrylic monomer, a cross-linking monomer A, a polymerisation initiator and a chain transfer agent.

(2) Polymeric particle according to (1), wherein the polymeric particle comprises
from 50.0 wt.-% to 10.0 wt.-%, preferably from 40.0 wt.-% to 20.0 wt.-%, more preferably from 35.0 wt.-% to 25.0 wt.-% of the cross-linked polymer A; and
from 50.0 wt.-% to 90.0 wt.-%, preferably from 60.0 wt.-% to 80.0 wt.-%, more preferably from 65.0 wt.-% to 75.0 wt.-% of the cross-linked polymer B, based on the weight of the polymeric particle.

(3) Polymeric particle according to (1) or (2), wherein
the cross-linked polymer A comprises repeating units derived from
from 65.0 wt.-% to 90.0 wt.-%, preferably from 70.0 wt.-% to 85.0 wt.-%, more preferably from 75.0 wt.-% to 82.0 wt.-% of at least one $C_{1-8}$-alkyl methacrylate or aralkyl methacrylate;
from 34.0 wt.-% to 5.0 wt.-%, preferably from 28.0 wt.-% to 13.0 wt.-%, more preferably from 25.0 wt.-% to 17.0 wt.-% of at least one $C_{1-8}$-alkyl acrylate; and
from 0.1 wt.-% to 5.0 wt.-%, preferably from 0.5 wt.-% to 3.0 wt.-%, more preferably from 1.0 wt.-% to 2.0 wt.-% of the cross-linking monomer A, based on the weight of the cross-linked polymer A; <u>and/or</u>
the cross-linked polymer B comprises repeating units derived from
at least 60.0 wt.-%, more preferably at least 70.0 wt.-%, even more preferably at least 80.0 wt.-% of at least one $C_{1-8}$-alkyl acrylate; and
0.1 wt.-% to 10.0 wt.-% of a crosslinking monomer B, based on the weight of the cross-linked polymer B.

(4) Polymeric particle according to any of (1) to (3), wherein the cross-linked polymer B has a glass transition temperature Tg from -80 °C to -20 °C, preferably from -65 °C to -30 °C and the cross-linked polymer A has a glass transition temperature Tg from 50 °C to 120 °C, preferably from 60 °C to 110 °C.

(5) Polymeric particle according to any of (1) to (4), wherein
the cross-linked polymer B has a glass transition temperature Tg from -80 °C to -20 °C, preferably from -65 °C to -30 °C and
the cross-linked polymer A has a glass transition temperature Tg from 50 °C to 120 °C, preferably from 60 °C to 110 °C or a glass transition temperature Tg from -10 °C to 50 °C, preferably from 5 °C to 30 °C.

(6) Polymeric particle according to any of (1) to (5), wherein the polymeric particle has an average diameter from 320 nm to 1200 nm, preferably from 350 nm to 600 nm.

(7) Polymeric particle according to any of (1) to (6), wherein the chain transfer agent is a compound having at least one thiol group and is preferably selected from thioglycolic acid, pentaerythritol tetrathioglycolate, 2-mercaptoethanol, 2-ethylhexylthioglycolat, or a $C_{1-20}$-alkyl thiol such as n-dodecylthiol or *tert*-dodecylthiol.

(8) Polymeric particle according to any of (1) to (7), wherein the reaction mixture comprises from 0.1 wt.-% to 0.5 wt.-%, preferably from 0.2 wt.-% to 0.4 wt.-% of the chain transfer agent, based on the weight of the cross-linked polymer A.

(9) Process for the preparation of polymeric particles according to any of (1) to (8), the process comprising at least the following steps:

(a) forming a first inner layer comprising a cross-linked polymer B; and
(b) forming an outer layer comprising a cross-linked polymer A distinct from the cross-linked polymer B,

wherein the step (b) is carried out by emulsion polymerisation of a reaction mixture comprising at least one (meth)acrylic monomer, a cross-linking monomer A, a polymerisation initiator and a chain transfer agent and the polymeric particles are obtained in step (b) in form of an aqueous dispersion.

(10) Process for the preparation of polymeric particles according to (9), wherein the process further comprises a step (c), in which the aqueous dispersion obtained in step (b) is processed by a method selected from freeze coagulation, spray drying, lyophilisation or salting out to give the polymeric particles in form of a powder.

(11) (Meth)acrylic resin concentrate comprising polymeric particles according to any of (1) to (8) dispersed in a (meth)acrylic resin.

(12) (Meth)acrylic resin concentrate according to (11), wherein the (meth)acrylic resin comprises from 50 wt.-% to 100 wt.-% of at least one monomeric (meth)acrylate, based on the weight of the (meth)acrylic resin.

(13) Process for the preparation of a (meth)acrylic resin concentrate according to (11) or (12), wherein the process comprises at least the following steps:

(a) forming a first inner layer comprising a cross-linked polymer B;
(b) forming an outer layer comprising a cross-linked polymer A distinct from the cross-linked polymer B, wherein the step (b) is carried out by emulsion polymerisation of a reaction mixture comprising at least one (meth)acrylic monomer, a cross-linking monomer A, a polymerisation initiator and a chain transfer agent and the polymeric particles are obtained in form of an aqueous dispersion;
(c) freeze coagulation, spray drying, lyophilisation or salting out of the aqueous dispersion obtained in step (b), wherein the polymeric particles are isolated in form of a powder; and
(d) dispersing the powder obtained in step (c) in a (meth)acrylic resin.

(14) Curable (meth)acrylic composition comprising polymeric particles according to any of (1) to (8).

(15) Cured (meth)acrylic resin composition comprising polymeric particles according to any of (1) to (8) dispersed in a cured (meth)acrylic resin matrix.

The following examples illustrate the present invention in detail but are not meant to be limiting in any way.

## Examples

### I. Abbreviations

| | |
|---|---|
| AlMA | allyl methacrylate |
| BnMA | benzyl methacrylate |

| | |
|---|---|
| BuA | butyl acrylate |
| EtA | ethyl acrylate |
| IPD | isophorone diamine |
| $K_1C$ | fracture toughness |
| MMA | methyl methacrylate |
| NaOH | sodium hydroxide |
| NDM | *n*-dodecyl mercaptane |

**II. General procedures for isolation and processing of resin particles**

**A. Isolation of polymeric particles in form of a powder using a batch wise freeze coagulation**

An aqueous dispersion of polymeric particles is placed in a 10 l vessel, frozen and kept for 24 h at - 18°C. Subsequently, the frozen dispersion is slowly thawed overnight at room temperature. The resulting coagulate is divided into several portions and the solids are separated by centrifugation using a centrifuge Thomas INOX, Type 776 SEK 203 equipped with a plastic filter.

The obtained solids are washed with 8 l water and separated by centrifugation. The material is dried at 60 °C for 16 hours to deliver the polymeric particles in form of a dry powder.

**B. Isolation of polymeric particles in form of a powder using continuous freeze coagulation**

An aqueous dispersion of polymeric particles is subjected to a continuous freeze coagulation using a role-type icemaking machine HIGEL HEC 400 obtainable from Higel Kältetechnik e. K., Kehl-Marlen, Germany strictly following the procedure employed in Examples 1-5 of the application WO 2015/074883. The process parameters are as follows:

| | |
|---|---|
| Role speed: | 0.55 $min^{-1}$ |
| Role temperature: | -10 °C |
| Role immersion depth: | 135 mm |
| Sintering temperature: | 85 °C |
| Sintering time: | 20 min |
| Solid content during sintering: | 24 wt.-% |

The material is obtained in form of a dry powder.

**III. Preparation of resin particles**

**Example 1a. Preparation of polymeric particles comprising a cross-linked copolymer of benzyl methacrylate and butyl acrylate in the outer layer**

| | |
|---|---|
| Core: | poly-(BuA-co-AlMA), weight ratio 98 : 2 |
| Outer layer: | poly-(BnMA-co-BuA-co-AlMA), weight ratio 68.5 : 30 : 1.5 |
| Average particle diameter: | 750 nm |
| Chain transfer agent: | 0.3 wt.-% NDM during formation of the outer layer |
| Weight ratio core : outer shell: | 70 : 30 |

A 6 l reaction vessel was charged with 1493.96 g water, 0.20 g acetic acid, 42.5 g seed latex (26.4 wt.-% aqueous latex of particles consisting of poly-(BuA-co-AlMA), weight ratio 98 : 2, average particle diameter: 134 nm) and 0.004 g iron (II) sulphate ($FeSO_4$ x 7 $H_2O$). The mixture was heated to 55°C.

To this mixture, a solution of 2.80 g sodium hydroxymethylsulfinate (Rongalite®) in 40 g water was added at 55 °C within 5 minutes.

Subsequently, a mixture comprising 2.66 g *tert*-butyl hydroperoxide (Trigonox® AW 70), 11.20 g $C_{14/17}$-*sec*-alkyl sulphonate (Hostapur® SAS 30), 2137.24 g water, 1399.44 g BuA and 28.56 g AlMA was prepared using a dispersing instrument ULTRA-TURRAX® at 3000 to 4000 $min^{-1}$ for 3 to 4 min. This mixture was slowly added within 3 hours at 60 °C to the reaction mixture in the reaction vessel to form the first inner layer. Then, the reaction mixture was stirred for

further 10 min.

In a further separate vessel, 1.20 g sodium hydroxymethylsulfinate (Rongalite®) was dissolved in 100 g water. This solution was added dropwise to the reaction mixture.

In a separate vessel, 4.80 g sodium $C_{14/17}$-*sec*-alkyl sulphonate (Hostapur® SAS 30) was added to 915.96 g water, followed by 1.14 g *tert*-butyl hydroperoxide (Trigonox® AW 70), 419.22 g BnMA, 183.60 g BuA, 9.18 g AIMA and 1.84 g NDM. The mixture was dispersed using a dispersing instrument ULTRA-TURRAX® at 300 to 400 $min^{-1}$ for 2 min, slowly added to the reaction vessel at 62 °C within 60 minutes and stirred for further 10 min. at 55 °C to form the outer layer of the polymeric particles. To the resulting reaction mixture 80 ml of aqueous 1% NaOH solution was added at room temperature and the mixture was filtered through a 80 μm metallic sieve.

The average particle diameter was measured using the particle size analyser Nanosizer N5 Submicron Particle Size Analyzer (Beckmann Coulter) and was about 750 nm.

The aqueous dispersion of the polymeric particles had a solid content of about 29±1 wt.-%.

Subsequently, the aqueous dispersion was processed to a dry powder using continuous freeze coagulation according to the general procedure B. The material could be easily isolated without any undesired formation of non-redispersible agglomerates.

**Examples 1b-1e. Preparation of polymeric particles comprising a cross-linked copolymer of benzyl methacrylate and butyl acrylate in the outer layer having varying particle diameters**

Several batches of polymeric particles having different average particle diameters were prepared according to the procedure of Example 1a. The composition of the core layer and the outer layer of polymeric particles in Examples 1b-1e was identical to those of the polymeric particles in Example 1a.

The amount of seed latex was adjusted following formula:

$$\text{amount seed latex [g]} = 1/(\text{radius target particle size [nm]}/\ \text{radius seed latex [nm]})^3 \times \text{amount monomers [g]}$$

The resulting aqueous dispersions were processed to a dry powder as described above. The materials could be easily isolated using continuous freeze coagulation without any undesired formation of non-redispersible agglomerates.

The test results are summarised in Table 1 below:

**Table 1**

| Example | Average particle diameter, nm |
|---|---|
| 1b | 140 |
| 1c | 160 |
| 1d | 512 |
| 1a | 750 |
| 1e | 946 |

**Examples 1f-1q. Preparation of polymeric particles comprising a cross-linked copolymer of benzyl methacrylate and butyl acrylate in the outer layer having varying cross-linking agent content**

Several batches of polymeric particles having varying cross-linking agent content were prepared according to the procedure of Example 1a. The composition of the core layer and the outer layer of polymeric particles as well as the average diameter, unless specified otherwise, was identical to those of the polymeric particles in Example 1a.

The resulting aqueous dispersions were processed to a dry powder as described above. The materials could be easily isolated using continuous freeze coagulation without any undesired formation of non-redispersible agglomerates.

The test results are summarised in Table 2 below:

**Table 2**

| Example | Outer layer composition | Average particle diameter, nm |
|---|---|---|
| 1f | BnMA : BuA : AlMA<br>60 : 40 : 0 | 644 |
| 1i | BnMA : BuA : AlMA<br>70 : 30 : 0 | 730 |
| 1j | BnMA : BuA : AlMA<br>80 : 20 : 0 | 604 |
| 1k | BnMA : BuA : AlMA<br>69.9 : 30 : 0.1 | 714 |
| 1l | BnMA : BuA : AlMA<br>68 : 30 : 1.5 | 750 |
| 1m | BnMA : BuA : AlMA<br>67: 30 : 3.0 | 874 |
| 1n | BnMA : BuA : AlMA<br>68: 30 : 2.0 | 290 |
| 1o | BnMA : BuA : AlMA<br>68: 30 : 2.0 | 346 |
| 1q | BnMA : BuA : AlMA<br>69: 30 : 1.0 | 924 |

**Example 2. Preparation of polymeric particles comprising a cross-linked benzyl methacrylate in the outer layer**

| | |
|---|---|
| Core: | poly-(BuA-co-AlMA), weight ratio 98 : 2 |
| Outer layer: | poly-(BnMA-co-AlMA), weight ratio 98.5 : 1.5 |
| Average particle diameter: | 772 nm |
| Chain transfer agent: | 0.3 wt.-% NDM during formation of the outer layer |
| Weight ratio core : outer shell: | 70 : 30 |

The polymeric particles were synthesised according to the procedure of Example 1a but without using butyl acrylate during formation of the outer layer. Isolation of the polymeric particles in form of a dry powder took place as described in Example 1a. The material could be easily isolated using continuous freeze coagulation without any undesired formation of non-redispersible agglomerates.

**Example 3. Preparation of polymeric particles comprising a cross-linked copolymer of methyl methacrylate and butyl acrylate in the outer layer**

| | |
|---|---|
| Core: | poly-(BuA-co-AlMA), weight ratio 98 : 2 |
| Outer layer: | poly-(MMA-co-BuA-co-AlMA), weight ratio 68.5 : 30: 1.5 |
| Average particle diameter: | 420 nm |
| Chain transfer agent: | 0.3 wt.-% NDM during formation of the outer layer |
| Weight ratio core : outer shell: | 70 : 30 |

The aqueous dispersion of polymeric particles was prepared according to the procedure of Example 1a. Isolation of the polymeric particles in form of a dry powder took place as described in Example 1a. The material could be easily isolated using continuous freeze coagulation without any undesired formation of non-redispersible agglomerates.

**Example 4a. Preparation of polymeric particles comprising a cross-linked copolymer of methyl methacrylate and ethyl acrylate in the outer layer having a particle diameter of 400 nm**

| | |
|---|---|
| Core: | poly-(BuA-co-AlMA), weight ratio 98 : 2 |
| Outer layer: | poly-(MMA-co-EtA-co-AlMA), weight ratio 78.5 : 20: 1.5 |
| Average particle diameter: | 420 nm |
| Chain transfer agent: | 0.3 wt.-% NDM during formation of the outer layer |
| Weight ratio core : outer shell: | 70 : 30 |

A mixture of 6.45 g of a seed latex having an average diameter of 18 nm and a solid content of 13.3 wt.-%, 0.55 g acetic acid and 0.01 g iron (II) sulphate ($FeSO_4$ x 7 $H_2O$) in 3943 g water was charged into a 20 l reaction vessel.

In a separate vessel, 9.47 g sodium hydroxymethylsulfinate (Rongalite®) was dissolved in 274 g water.

In yet a further vessel, 46.00 g sodium $C_{14/17}$-*sec*-alkyl sulphonate (Hostapur® SAS 30) was added to 3979 g water, followed by 7.28 g *tert*-butyl hydroperoxide (Trigonox® AW 70), 5748 g BuA, 117.31 g AlMA and 5.87 g octadecyl-3-(3,5-di-*tert*-butyl-4-hydroxyphenyl)-propionate (Irganox® 1076). The mixture was dispersed using a dispersing instrument ULTRA-TURRAX® (available from IKA-Werke GmbH & CO. KG, Germany) at 4000 to 5000 $min^{-1}$ for 2 min.

At 50 °C the Rongalite® solution was slowly added to the reaction vessel within 10 minutes. Subsequently, the freshly prepared mixture comprising BuA was slowly added at ca 62 °C to form the first inner layer of the polymeric particles within 180 min. The reaction mixture was stirred for further 10 minutes.

In a further separate vessel, 4.06 g sodium hydroxymethylsulfinate (Rongalite®) was dissolved in 274 g water. This solution was added dropwise to the reaction mixture in the 20 l reaction vessel at 55°C within 10 minutes.

In a separate vessel, 19.72 g sodium $C_{14/17}$-*sec*-alkyl sulphonate was added to 1771 g water, followed by 3.12 g *tert*-butyl hydroperoxide, 1937.25 g MMA, 502.74 g EtA, 37.71 g AlMA, 8.80 g NDM and 2.51 g octadecyl-3-(3,5-di-*tert*-butyl-4-hydroxyphenyl)-propionate (Irganox® 1076). The mixture was dispersed using a dispersing instrument ULTRA-TURRAX® at 4000 to 5000 $min^{-1}$ for 2 minutes, slowly added to the reaction vessel at 62°C within 60 minutes and stirred for further 30 minutes at 55°C to form the outer layer of the polymeric particles.

The resulting reaction mixture was diluted with 1300 g water and filtered through a 80 $\mu$m metallic sieve.

The aqueous dispersion of the polymeric particles had a solid content of about 42$\pm$1 wt.-%.

Subsequently, the aqueous dispersion was processed to a dry powder using continuous freeze coagulation, as described above. The material could be easily isolated without any undesired formation of non-redispersible agglomerates.

**Example 4b-4f. Preparation of polymeric particles comprising a cross-linked copolymer of methyl methacrylate and ethyl acrylate in the outer layer with different particle diameters**

Several batches of polymeric particles having different average particle diameters were prepared according to the procedure of Example 4a. The composition of the core and the outer layer of polymeric particles in Examples 4b-4f was identical to those of the polymeric particles in Example 4a.

The amount of seed latex was adjusted following formula:

$$\text{amount seed latex [g]} = 1/(\text{radius target particle size [nm]}/\ \text{radius seed latex [nm]})^3 \times \text{amount monomers [g]}$$

The resulting aqueous dispersions were processed to a dry powder as described above. The materials could be easily isolated using continuous freeze coagulation without any undesired formation of non-redispersible agglomerates.

The test results are summarised in Table 3 below:

**Table 3**

| Example | Average particle diameter, nm |
|---|---|
| 4b | 206 |
| 4c | 356 |

(continued)

| Example | Average particle diameter, nm |
|---|---|
| 4a | 420 |
| 4d | 530 |
| 4e | 590 |
| 4f | 788 |

**Example 4g-4h. Preparation of polymeric particles comprising a cross-linked copolymer of methyl methacrylate and ethyl acrylate in the outer layer with different outer layer compositions**

Polymeric particles having varying outer layer compositions were prepared according to the procedure of Example 4a:

Example 4g

| | |
|---|---|
| Core: | poly-(BuA-co-AlMA), weight ratio 98 : 2 |
| Outer layer: | poly-(MMA-co-EtA-co-AlMA), weight ratio 88.5 : 10: 1.5 |
| Average particle diameter: | 356 nm |
| Chain transfer agent: | 0.3 wt.-% NDM during formation of the outer layer |
| Weight ratio core : outer shell: | 70 : 30 |

Example 4h

| | |
|---|---|
| Core: | poly-(BuA-co-AlMA), weight ratio 98 : 2 |
| Outer layer: | poly-(MMA-co-EtA-co-AlMA), weight ratio 68.5 : 30: 1.5 |
| Average particle diameter: | 372 nm |
| Chain transfer agent: | 0.3 wt.-% NDM during formation of the outer layer |
| Weight ratio core : outer shell: | 70 : 30 |

The resulting aqueous dispersions were processed to a dry powder as described above. The materials could be easily isolated using continuous freeze coagulation without any undesired formation of non-redispersible agglomerates.

## Claims

1. Process for the preparation of polymeric particles having an average diameter from 300 nm to 1200 nm and comprising at least a first inner layer and an outer layer, the process comprising at least the following steps:

   (a) forming the first inner layer comprising a cross-linked polymer B; and
   (b) forming the outer layer of the polymeric particles comprising a cross-linked polymer A distinct from the cross-linked polymer B,

   wherein the step (b) is carried out by emulsion polymerisation of a reaction mixture comprising at least one (meth)acrylic monomer, a cross-linking monomer A, a polymerisation initiator and a chain transfer agent and the polymeric particles are obtained in step (b) in form of an aqueous dispersion.

2. Process for the preparation of polymeric particles according to (1), wherein the process further comprises a step (c), in which the aqueous dispersion obtained in step (b) undergoes freeze coagulation, spray drying, lyophilisation or salting out to give the polymeric particles in form of a powder.

3. Process for the preparation of a (meth)acrylic resin concentrate or of a curable (meth)acrylic resin composition comprising polymeric particles dispersed in a (meth)acrylic resin, wherein the polymeric particles have an average diameter from 300 nm to 1200 nm and comprise at least a first inner layer and an outer layer, and the process

comprises at least the following steps:

(a) forming a first inner layer comprising a cross-linked polymer B;
(b) forming an outer layer comprising a cross-linked polymer A distinct from the cross-linked polymer B, wherein the step (b) is carried out by emulsion polymerisation of a mixture comprising at least one (meth)acrylic monomer, a cross-linking monomer A, a polymerisation initiator and a chain transfer agent and the polymeric particles are obtained in form of an aqueous dispersion;
(c) freeze coagulation, spray drying, lyophilisation or salting out of the aqueous dispersion obtained in step (b), wherein the polymeric particles are isolated in form of a powder; and
(d) dispersing the powder obtained in step (c) in the (meth)acrylic resin.

**4.** Process for the preparation of a cured (meth)acrylic resin composition comprising polymeric particles, wherein the polymeric particles have an average diameter from 300 nm to 1200 nm and comprise at least a first inner layer and an outer layer and the process comprises at least the following steps:

(a) forming the first inner layer comprising a cross-linked polymer B;
(b) forming the outer layer comprising a cross-linked polymer A distinct from the cross-linked polymer B, wherein the step (b) is carried out by emulsion polymerisation of a mixture comprising at least one (meth)acrylic monomer, a cross-linking monomer A, a polymerisation initiator and a chain transfer agent and the polymeric particles are obtained in form of an aqueous dispersion;
(c) freeze coagulation, spray drying, lyophilisation or salting out of the aqueous dispersion obtained in step (b), wherein the polymeric particles are isolated in form of a powder;
(d) dispersing the powder obtained in step (c) in a first (meth)acrylic resin, wherein a (meth)acrylic resin concentrate or a curable (meth)acrylic resin composition is obtained;
(e) optionally, mixing the (meth)acrylic resin concentrate from step (d) with a second (meth)acrylic resin, wherein a curable (meth)acrylic resin composition is obtained; and
(f) curing the curable (meth)acrylic resin composition from step (d) or (e), wherein the cured (meth)acrylic resin composition is obtained.

**5.** Process according to any of (1) to (4), wherein the polymeric particles comprise
from 50.0 wt.-% to 90.0 wt.-%, preferably from 60.0 wt.-% to 80.0 wt.-%, more preferably from 65.0 wt.-% to 75.0 wt.-% of the cross-linked polymer B; and
from 50.0 wt.-% to 10.0 wt.-%, preferably from 40.0 wt.-% to 20.0 wt.-%, more preferably from 35.0 wt.-% to 25.0 wt.-% of the cross-linked polymer A, based on the weight of the polymeric particles.

**6.** Process according to any of Claims 1 to 5, wherein the cross-linked polymer B comprises repeating units derived from at least 60.0 wt.-%, more preferably at least 70.0 wt.-%, even more preferably at least 80.0 wt.-% of a $C_{1-8}$-alkyl acrylate; and 0.1 wt.-% to 10.0 wt.-% of a first crosslinking monomer, based on the weight of the cross-linked polymer B and/or
the cross-linked polymer A comprises repeating units derived from
from 65.0 wt.-% to 90.0 wt.-%, preferably from 70.0 wt.-% to 85.0 wt.-%, more preferably from 75.0 wt.-% to 82.0 wt.-% of a $C_{1-8}$-alkyl methacrylate;
from 34.0 wt.-% to 5.0 wt.-%, preferably from 28.0 wt.-% to 13.0 wt.-%, more preferably from 25.0 wt.-% to 17 wt.-% of a $C_{1-8}$-alkyl acrylate; and
from 0.1 wt.-% to 5.0 wt.-%, preferably from 0.5 wt.-% to 3.0 wt.-%, more preferably from 1.0 wt.-% to 2.0 wt.-% of a second crosslinking monomer.

**7.** Process according to any of Claims 1 to 6, wherein
the cross-linked polymer B has a glass transition temperature Tg from -80 °C to -20 °C, preferably from -65 °C to -30 °C and
the cross-linked polymer A has a glass transition temperature Tg from 50 °C to 120 °C, preferably from 60 °C to 110 °C or a glass transition temperature Tg from -10 °C to 50 °C, preferably from 5 °C to 30 °C.

**8.** Process according to any of Claims 1 to 7, wherein the polymeric particles have an acetone-soluble fraction less than 15.0 wt.-%, preferably less than 10.0 wt.-%, more preferably less than 5.0 wt.-%, based on the weight of the polymeric particles.

**9.** Process according to any of Claims 1 to 8, wherein the chain transfer agent in the step (b) is a compound having

at least one thiol group and is preferably selected from thioglycolic acid, pentaerythritol tetrathioglycolate, 2-mercaptoethanol, 2-ethylhexylthioglycolat, or a $C_{1-20}$-alkyl thiol such as n-dodecylthiol or *tert*-dodecylthiol.

**10.** Process according to any of Claims 1 to 9, wherein the reaction mixture in the step (b) comprises from 0.1 wt.-% to 0.5 wt.-%, preferably from 0.2 wt.-% to 0.4 wt.-% of the chain transfer agent, based on the total weight of the cross-linked polymer A in the polymeric particles..

**11.** Process according to any of Claims 1 to 10, wherein the cross-linked polymer B and the cross-linked polymer A both comprise repeating units derived from allyl methacrylate.

**12.** Process according to any of Claims 3 to 11, wherein the (meth)acrylic resin comprises from 50 wt.-% to 100 wt.-% of at least one monomeric (meth)acrylate, based on the weight of the (meth)acrylic resin.

**13.** Polymeric particles obtainable by the process according to any of Claims 1, 2 or 5 to 11.

**14.** Curable (meth)acrylic resin composition obtainable by the process according to any of Claims 3 or 5 to 12.

**15.** Cured (meth)acrylic resin composition obtainable by the process according to any of Claims 4 to 12.

**Patentansprüche**

**1.** Verfahren zur Herstellung von Polymerpartikeln mit einem durchschnittlichen Durchmesser von 300 nm bis 1200 nm und mit mindestens einer ersten inneren Schicht und einer äußeren Schicht, wobei das Verfahren mindestens die folgenden Schritte umfasst:

(a) das Bilden der ersten, ein vernetztes Polymer B umfassenden inneren Schicht und
(b) das Bilden der äußeren Schicht der Polymerpartikel, welche ein von dem vernetzten Polymer B verschiedenes vernetztes Polymer A umfasst,

wobei der Schritt (b) durch Emulsionspolymerisation einer mindestens ein (Meth)acrylmonomer, ein vernetzendes Monomer A, einen Polymerisationsinitiator und ein Kettenübertragungsmittel umfassenden Reaktionsmischung erfolgt und die Polymerpartikel in Schritt (b) in Form einer wässrigen Dispersion erhalten werden.

**2.** Verfahren zur Herstellung von Polymerpartikeln nach (1), wobei das Verfahren weiterhin einen Schritt (c) umfasst, in welchem die in dem Schritt (b) erhaltene wässrige Dispersion einer Gefrierkoagulation, einer Sprühtrocknung, einer Lyophilisation oder einem Aussalzen unterzogen wird, unter Erhalt der Polymerpartikel in Form eines Pulvers.

**3.** Verfahren zur Herstellung eines (Meth)acrylharzkonzentrats oder einer härtbaren (Meth)acrylharzzusammensetzung, welche in einem (Meth)acrylharz dispergierte Polymerpartikel umfasst, wobei die Polymerpartikel einen mittleren Durchmesser von 300 nm bis 1200 nm aufweisen und mindestens eine erste innere Schicht und eine äußere Schicht umfassen, und wobei das Verfahren mindestens die folgenden Schritte umfasst:

(a) das Bilden einer ersten, ein vernetztes Polymer B umfassenden inneren Schicht,
(b) das Bilden einer äußeren Schicht, welche ein von dem vernetzten Polymer B verschiedenes vernetztes Polymer A umfasst, wobei der Schritt (b) durch Emulsionspolymerisation einer mindestens ein (Meth)acrylmonomer, ein vernetzendes Monomer A, einen Polymerisationsinitiator und ein Kettenübertragungsmittel umfassenden Mischung erfolgt und die Polymerpartikel in Form einer wässrigen Dispersion erhalten werden,
(c) Gefrierkoagulation, Sprühtrocknung, Lyophilisation oder Aussalzen der in dem Schritt (b) erhaltenen wässrigen Dispersion, wobei die Polymerpartikel in Form eines Pulvers isoliert werden, und
(d) Dispergieren des in dem Schritt (c) erhaltenen Pulvers in dem (Meth)acrylharz.

**4.** Verfahren zur Herstellung einer gehärteten, Polymerpartikel umfassenden (Meth)acrylharzzusammensetzung, wobei die Polymerpartikel einen mittleren Durchmesser von 300 nm bis 1200 nm aufweisen und mindestens eine erste innere Schicht und eine äußere Schicht umfassen und das Verfahren mindestens die folgenden Schritte umfasst:

(a) das Bilden einer ersten, ein vernetztes Polymer B umfassenden inneren Schicht,
(b) das Bilden einer äußeren Schicht, welche ein von dem vernetzten Polymer B verschiedenes vernetztes

Polymer A umfasst, wobei der Schritt (b) durch Emulsionspolymerisation einer mindestens ein (Meth)acrylmonomer, ein vernetzendes Monomer A, einen Polymerisationsinitiator und ein Kettenübertragungsmittel umfassenden Mischung erfolgt und die Polymerpartikel in Form einer wässrigen Dispersion erhalten werden,
(c) Gefrierkoagulation, Sprühtrocknung, Lyophilisation oder Aussalzen der in dem Schritt (b) erhaltenen wässrigen Dispersion, wobei die Polymerpartikel in Form eines Pulvers isoliert werden,
(d) das Dispergieren des in dem Schritt (c) erhaltenen Pulvers in einem ersten (Meth)acrylharz, unter Erhalt eines (Meth)acrylharzkonzentrats oder einer härtbaren (Meth)acrylharzzusammensetzung,
(e) gegebenenfalls das Mischen des (Meth)acrylharzkonzentrats aus dem Schritt (d) mit einem zweiten (Meth)acrylharz unter Erhalt einer härtbaren (Meth)acrylharzzusammensetzung und
(f) das Härten der härtbaren (Meth)acrylharzzusammensetzung aus dem Schritt (d) oder (e), unter Erhalt der gehärteten (Meth)acrylharzzusammensetzung.

**5.** Verfahren nach mindestens einem von (1) bis (4), wobei die Polymerpartikel Folgendes umfassen:

50,0 Gew.-% bis 90,0 Gew.-%, vorzugsweise 60,0 Gew.-% bis 80,0 Gew.-%, besonders bevorzugt 65,0 Gew.-% bis 75,0 Gew.-% des vernetzten Polymers B und
50,0 Gew.-% bis 10,0 Gew.-%, vorzugsweise 40,0 Gew.-% bis 20,0 Gew.-%, besonders bevorzugt 35,0 Gew.-% bis 25,0 Gew.-% des vernetzten Polymers A, bezogen auf das Gewicht der Polymerpartikel.

**6.** Verfahren nach mindestens einem der Ansprüche 1 bis 5, wobei das vernetzte Polymer B Wiederholungseinheiten abgeleitet von
mindestens 60,0 Gew.-%, besonders bevorzugt mindestens 70,0 Gew.-%, noch mehr bevorzugt mindestens 80,0 Gew.-% eines Acrylsäure-$C_{1-8}$-Alkylesters und
0,1 Gew.-% bis 10,0 Gew.-% eines ersten vernetzenden Monomers, bezogen auf das Gewicht des vernetzten Polymers B umfasst und/oder
das vernetzte Polymer A Wiederholungseinheiten abgeleitet von
65,0 Gew.-% bis 90,0 Gew.-%, vorzugsweise 70,0 Gew.-% bis 85,0 Gew.-%, besonders bevorzugt 75,0 Gew.-% bis 82,0 Gew.-% eines Methacrylsäure-$C_{1-8}$-alkylesters,
34,0 Gew.-% bis 5,0 Gew.-%, vorzugsweise 28,0 Gew.-% bis 13,0 Gew.-%, besonders bevorzugt 25,0 Gew.-% bis 17 Gew.-% eines Acrylsäure-$C_{1-8}$-alkylesters und
0,1 Gew.-% bis 5,0 Gew.-%, vorzugsweise 0,5 Gew.-% bis 3,0 Gew.-%, besonders bevorzugt 1,0 Gew.-% bis 2,0 Gew.-% eines zweiten vernetzenden Monomers umfasst.

**7.** Verfahren nach mindestens einem der Ansprüche 1 bis 6 wobei
das vernetzte Polymer B eine Glasübergangstemperatur Tg von -80°C bis -20°C, vorzugsweise von -65°C bis -30°C, aufweist und
das vernetzte Polymer A eine Glasübergangstemperatur Tg von 50°C bis 120°C, vorzugsweise von 60°C bis 110°C, oder eine Glasübergangstemperatur Tg von -10°C bis 50°C, vorzugsweise von 5°C bis 30°C, aufweist.

**8.** Verfahren nach mindestens einem der Ansprüche 1 bis 7, wobei die Polymerpartikel einen acetonlöslichen Anteil von weniger als 15,0 Gew.-%, vorzugsweise weniger als 10,0 Gew.-%, besonders bevorzugt weniger als 5,0 Gew.-%, bezogen auf das Gewicht der Polymerpartikel, aufweisen.

**9.** Verfahren nach mindestens einem der Ansprüche 1 bis 8, wobei es sich bei dem Kettenübertragungsmittel im Schritt (b) um eine Verbindung mit mindestens einer Thiolgruppe handelt, vorzugsweise ausgewählt aus Thioglykolsäure, Pentaerythrittetrathioglykolat, 2-Mercaptoethanol, 2-Ethylhexylthioglykolat oder einem $C_{1-20}$-Alkylthiol wie *n*-Dodecylthiol oder *tert*.-Dodecylthiol.

**10.** Verfahren nach mindestens einem der Ansprüche 1 bis 9, wobei die Reaktionsmischung in Schritt (b) 0,1 Gew.-% bis 0,5 Gew.-%, vorzugsweise 0,2 Gew.-% bis 0,4 Gew.-%, an Kettenübertragungsmittel umfasst, bezogen auf das Gesamtgewicht des vernetzten Polymers A in den Polymerpartikeln.

**11.** Verfahren nach einem der Ansprüche 1 bis 10, wobei sowohl das vernetzte Polymer B als auch das vernetzte Polymer A von Methacrylsäureallylester abgeleitete Wiederholungseinheiten umfassen.

**12.** Verfahren nach einem der Ansprüche 3 bis 11, wobei das (Meth)acrylharz 50 Gew.-% bis 100 Gew.-% mindestens eines monomeren (Meth)acrylats umfasst, bezogen auf das Gewicht des (Meth)acrylharzes.

**13.** Polymerpartikel, erhältlich durch das Verfahren nach einem der Ansprüche 1, 2 oder 5 bis 11.

**14.** Härtbare (Meth)acrylharzzusammensetzung, erhältlich durch das Verfahren nach einem der Ansprüche 3 oder 5 bis 12.

**15.** Gehärtete (Meth)acrylharzzusammensetzung, erhältlich durch das Verfahren nach einem der Ansprüche 4 bis 12.

**Revendications**

**1.** Procédé de préparation de particules polymères ayant un diamètre moyen de 300 nm à 1 200 nm et comprenant au moins une première couche interne et une couche externe, le procédé comprenant au moins les étapes suivantes :

(a) la formation de la première couche interne comprenant un polymère réticulé B ; et
(b) la formation de la couche externe des particules polymères comprenant un polymère réticulé A distinct du polymère réticulé B,

dans lequel l'étape (b) est effectuée par polymérisation en émulsion d'un mélange réactionnel comprenant au moins un monomère (méth)acrylique, un monomère de réticulation A, un initiateur de polymérisation et un agent de transfert de chaîne et les particules polymères sont obtenues à l'étape (b) sous la forme d'une dispersion aqueuse.

**2.** Procédé de préparation de particules polymères selon (1), le procédé comprenant en outre une étape (c), durant laquelle la dispersion aqueuse obtenue à l'étape (b) subit une coagulation par congélation, un séchage par atomisation, une lyophilisation ou un salage pour produire les particules polymères sous la forme d'une poudre.

**3.** Procédé de préparation d'un concentré de résine (méth)acrylique ou d'une composition de résine (méth)acrylique durcissable comprenant des particules polymères dispersées dans une résine (méth)acrylique, dans lequel les particules polymères ont un diamètre moyen de 300 nm à 1 200 nm et comprennent au moins une première couche interne et une couche externe, et le procédé comprenant au moins les étapes suivantes :

(a) la formation d'une première couche interne comprenant un polymère réticulé B ;
(b) la formation d'une couche externe comprenant un polymère réticulé A distinct du polymère réticulé B, l'étape (b) étant effectuée par polymérisation en émulsion d'un mélange comprenant au moins un monomère (méth)acrylique, un monomère de réticulation A, un initiateur de polymérisation et un agent de transfert de chaîne et les particules polymères étant obtenues sous la forme d'une dispersion aqueuse ;
(c) la coagulation par congélation, le séchage par atomisation, la lyophilisation ou le salage de la dispersion aqueuse obtenue à l'étape (b), les particules polymères étant ainsi isolées sous la forme d'une poudre ; et
(d) la dispersion de la poudre obtenue à l'étape (c) dans la résine (méth)acrylique.

**4.** Procédé de préparation d'une composition de résine (méth)acrylique durcie comprenant des particules polymères, dans lequel les particules polymères ont un diamètre moyen de 300 nm à 1200 nm et comprennent au moins une première couche interne et une couche externe, et le procédé comprenant au moins les étapes suivantes :

(a) la formation de la première couche interne comprenant un polymère réticulé B ;
(b) la formation de la couche externe comprenant un polymère réticulé A distinct du polymère réticulé B, l'étape (b) étant effectuée par polymérisation en émulsion d'un mélange comprenant au moins un monomère (méth)acrylique, un monomère de réticulation A, un initiateur de polymérisation et un agent de transfert de chaîne et les particules polymères étant obtenues sous la forme d'une dispersion aqueuse ;
(c) la coagulation par congélation, le séchage par atomisation, la lyophilisation ou le salage de la dispersion aqueuse obtenue à l'étape (b), les particules polymères étant ainsi isolées sous la forme d'une poudre ;
(d) la dispersion de la poudre obtenue à l'étape (c) dans une première résine (méth)acrylique, un concentré de résine (méth)acrylique ou une composition de résine (méth)acrylique durcissable étant ainsi obtenu(e) ;
(e) optionnellement, le mélange du concentré de résine (méth)acrylique obtenu à l'étape (d) avec une deuxième résine (méth)acrylique, une composition de résine (méth)acrylique durcissable étant ainsi obtenue ;
et
(f) le durcissement de la composition de résine (méth)acrylique durcissable obtenue à l'étape (d) ou (e), la composition de résine (méth)acrylique durcie étant ainsi obtenue.

5. Procédé selon l'une quelconque des (1) à (4), dans lequel les particules polymères comprennent :

de 50,0 % en poids à 90,0 % en poids, préférablement de 60,0 % en poids à 80,0 % en poids, plus préférablement de 65,0 % en poids à 75,0 % en poids du polymère réticulé B ; et
de 50,0 % en poids à 10,0 % en poids, préférablement de 40,0 % en poids à 20,0 % en poids, plus préférablement de 35,0 % en poids à 25,0 % en poids du polymère réticulé A, relativement au poids des particules polymères.

6. Procédé selon l'une quelconque des revendications 1 à 5, dans lequel le polymère réticulé B comprend des unités de répétition dérivées de :

au moins 60,0 % en poids, plus préférablement au moins 70,0 % en poids, encore plus préférablement au moins 80,0 % en poids d'un acrylate d'alkyle $C_{1-8}$ ; et
0,1 % en poids à 10,0 % en poids d'un premier monomère de réticulation, relativement au poids du polymère réticulé B et/ou
le polymère réticulé A comprend des unités de répétition dérivées de :

de 65,0 % en poids à 90,0 % en poids, préférablement de 70,0 % en poids à 85,0 % en poids, plus préférablement de 75,0 % en poids à 82,0 % en poids d'un méthacrylate d'alkyle $C_{1-8}$ ;
de 34,0 % en poids à 5,0 % en poids, préférablement de 28,0 % en poids à 13,0 % en poids, plus préférablement de 25,0 % en poids à 17 % en poids d'un acrylate d'alkyle $C_{1-8}$ ; et
de 0,1 % en poids à 5,0 % en poids, préférablement de 0,5 % en poids à 3,0 % en poids, plus préférablement de 1,0 % en poids à 2,0 % en poids d'un deuxième monomère de réticulation.

7. Procédé selon l'une quelconque des revendications 1 à 6, dans lequel
le polymère réticulé B a une température de transition vitreuse Tg de -80 °C à -20 °C, préférablement de -65 °C à -30 °C, et
le polymère réticulé A a une température de transition vitreuse Tg de 50 °C à 120 °C, préférablement de 60 °C à 110 °C ou une température de transition vitreuse Tg de -10 °C à 50 °C, préférablement de 5 °C à 30 °C.

8. Procédé selon l'une quelconque des revendications 1 à 7, dans lequel les particules polymères comportent une fraction soluble dans l'acétone dans une quantité inférieure à 15,0 % en poids, préférablement inférieure à 10,0 % en poids, plus préférablement inférieure à 5,0 % en poids, relativement au poids des particules polymères.

9. Procédé selon l'une quelconque des revendications 1 à 8, dans lequel l'agent de transfert de chaîne à l'étape (b) est un composé comportant au moins un groupe thiol et est sélectionné préférablement parmi l'acide thioglycolique, le tétrathioglycolate de pentaérythritol, le 2-mercaptoéthanol, le thioglycolate de 2-éthylhexyle, ou un alkylthiol $C_{1-20}$ tel que le *n*-dodécylthiol ou le *tert*-dodécylthiol.

10. Procédé selon l'une quelconque des revendications 1 à 9, dans lequel le mélange réactionnel à l'étape (b) comprend de 0,1 % en poids à 0,5 % en poids, préférablement de 0,2 % en poids à 0,4 % en poids de l'agent de transfert de chaîne, relativement au poids total du polymère réticulé A dans les particules polymères.

11. Procédé selon l'une quelconque des revendications 1 à 10, dans lequel le polymère réticulé B et le polymère réticulé A comprennent tous deux des unités de répétition dérivées de méthacrylate d'allyle.

12. Procédé selon l'une quelconque des revendications 3 à 11, dans lequel la résine (méth) acrylique comprend de 50 % en poids à 100 % en poids d'au moins un (méth)acrylate monomère, relativement au poids de la résine (méth)acrylique.

13. Particules polymères pouvant être obtenues par le procédé selon l'une quelconque des revendications 1, 2 ou 5 à 11.

14. Composition de résine (méth)acrylique durcissable pouvant être obtenue par le procédé selon l'une quelconque des revendications 3 ou 5 à 12.

15. Composition de résine (méth)acrylique durcie pouvant être obtenue par le procédé selon l'une quelconque des revendications 4 à 12.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 2395032 A1
- EP 2662414 A1
- EP 2796482 A1
- WO 2016046043 A
- DE 3343766
- DE 3210891
- DE 2850105
- DE 2742178
- DE 3701579
- WO 2015074883 A
- US 2750395 A
- US 2890194 A
- US 3018262 A


### Non-patent literature cited in the description


- Acryl- und Methacrylverbindungen. **H. RAUCH-PUNTIGAM ; TH. VÖLKER.** Acrylic and methacrylic compounds. Springer, 1967
- **HOUBEN-WEYL.** Methoden der organischen Chemie [Methods of Organic Chemistry. Georg Thieme, 1961, vol. XIV/1, 66
- Kirk-Othmer, Encyclopedia of Chemical Technology. J. Wiley, 1978, vol. 1, 29611
- **FOX T. G.** *Bull. Am. Physics Soc.,* 1956, vol. 1 (3), 123
- Polymer Handbook. J. Wiley & Sons, 1975
- **LEE, H. ; NEVILLE, K.** Handbook of Epoxy Resins. McGraw-Hill Book Company, 1982